# EUROPEAN PATENT SPECIFICATION

(11) **EP 4 529 089 B1**
(45) Date of publication and mention of the grant of the patent: **25.02.2026**
(21) Application number: 23830001.6
(22) Date of filing: 16.06.2023
(51) Int. Cl.: H04L 9/40

(54) **DISTRIBUTION METHOD FOR ENCRYPTED INFORMATION, AND RELATED APPARATUS**
VERTEILUNGSVERFAHREN FÜR VERSCHLÜSSELTE INFORMATIONEN UND ZUGEHÖRIGE VORRICHTUNG
PROCÉDÉ DE DISTRIBUTION D'INFORMATIONS CHIFFRÉES ET APPAREIL ASSOCIÉ

(30) Priority: 27.06.2022 CN 202210736737
(43) Date of publication of application: 26.03.2025
(73) Proprietor: Huawei Technologies Co., Ltd., Shenzhen, Guangdong 518129 (CN)
(72) Inventor: SHI, Yulin, Shenzhen, Guangdong 518129 (CN); HAN, Tao, Shenzhen, Guangdong 518129 (CN); LIU, Kai, Shenzhen, Guangdong 518129 (CN)
(74) Representative: Goddar, Heinz J.
(86) International application number: PCT/CN2023/100655
(87) International publication number: WO 2024/001821

(56) References cited:
- CN-A- 101 022 418
- CN-A- 109 412 952
- CN-A- 113 300 998
- CN-A- 114 024 888
- CN-A- 114 567 544
- US-A1- 2006 184 999
- US-A1- 2022 174 051
- DOYLE J ET AL: "CCIE PROFESSIONAL DEVELOPMENT. ROUTING TCP/IP. VOLUME 2: A DETAILED EXAMINATION OF EXTERIOR ROUTING PROTOCOLS AND ADVANCED IP ROUTING ISSUES (CISCO PRESS, ISBN 1-57870-089-2)", CCIE PROFESSIONAL DEVELOPMENT: ROUTING TCP/IP, XX, XX, vol. 2, 1 January 2001 (2001-01-01), pages - 968PAGES, XP007901037

## Description

This application claims priority to Chinese Patent Application No. 202210736737.4, filed with the China National Intellectual Property Administration on June 27, 2022 and entitled "METHOD FOR DISTRIBUTING ENCRYPTION INFORMATION AND RELATED APPARATUS".

### TECHNICAL FIELD

This application relates to the field of internet technologies, and in particular, to a method for distributing encryption information and a related apparatus.

### BACKGROUND

Security services for traffic at the IP layer (security services for traffic at the IP layer, IPSec) are a set of protocols used to provide high-quality and encryption-based security services. The security services provided by the IPSec are provided at the IP layer and protect the IP layer and all protocols at the IP layer. Therefore, any path between a pair of hosts, between a pair of security gateways, or between a security gateway and a host can be protected by using the IPSec.

Currently, in an IPSec-based traffic encryption process, a dedicated encryption tunnel first needs to be created between two encryption parties. Then, the two encryption parties exchange, through the encryption tunnel, information needed for encryption, to generate a key for data encryption or decryption. Finally, either of the two encryption parties routes to-be-encrypted traffic to the encryption tunnel when obtaining the traffic destined for the other party, so that the traffic is encrypted and forwarded to the other party through the encryption tunnel.

However, when encrypted traffic is transmitted between any two network devices based on the IPSec, a dedicated encryption tunnel needs to be first established between the two network devices. As a result, network deployment complexity is high, and it is difficult to be widely used in an actual large-scale network environment.

Patent document CN 113 300 998 A discloses establishing an IPSec security alliance without the need of manual configuration or IKE auto-negotiation by cascading down and updating corresponding SA table entries.

Patent document US 2022/174051 Al discloses the use of ESP packets for transmitting SA

### SUMMARY

This application provides a method for distributing encryption information, so that encrypted transmission of data between two encryption parties can be implemented without establishing a dedicated encryption tunnel between the two encryption parties, to effectively reduce network deployment complexity.

A first aspect of this application provides a method for distributing encryption information, including: A first network device receives a first route advertisement packet. The first route advertisement packet includes a routing prefix and first encryption extended information related to the routing prefix, and the first encryption extended information includes a first parameter for key generation. Then, the first network device generates at least one key based on the first encryption extended information. The at least one key is used to encrypt a data packet from the first network device to a network indicated by the routing prefix and/or decrypt a data packet from the network indicated by the routing prefix to the first network device. The first network device generates a routing entry based on the first route advertisement packet. The routing entry includes the routing prefix, and the routing entry indicates an outbound interface on the first network device to the network indicated by the routing prefix and indicates to encrypt, before a data packet whose destination address belongs to the network indicated by the routing prefix is forwarded, the data packet by using the at least one key. In other words, the first network device generates the routing entry with an encryption attribute based on the first route advertisement packet.

In this solution, encryption extended information is carried in a route advertisement packet to indicate a routing prefix and the encryption extended information related to the routing prefix. In this way, when receiving the route advertisement packet, a network device can generate a key based on the encryption extended information in the route advertisement packet, and generate a routing entry with an encryption attribute. The routing entry can indicate the network device to encrypt a data packet by using the key, and then send an encrypted data packet to a network indicated by the routing prefix. In this method, transfer of encryption information between a plurality of network devices is implemented based on the route advertisement packet, and the network device is guided to generate the routing entry with the encryption attribute, so as to ensure that the network device can implement encrypted transmission of a data packet based on the routing entry, without establishing a dedicated encryption tunnel between the network devices. This effectively reduces network deployment complexity.

Optionally, the first encryption extended information is carried in a first type length value (type length value, TLV) field in the first route advertisement packet, and the first TLV field includes the first parameter for key generation.

Optionally, the first encryption extended information further includes information indicating a first encryption network topology, and the information about the first encryption network topology indicates a plurality of network devices forming the first encryption network topology and indicates that the plurality of network devices are allowed to establish an encrypted connection.

Optionally, the first encryption extended information is further carried in a second TLV field in the first route advertisement packet, and the second TLV field indicates the information about the first encryption network topology.

In this solution, a TLV field is newly added to the route advertisement packet, so that changes to an existing routing protocol can be reduced as much as possible while the encryption extended information is carried, to reduce actual deployment difficulty.

Optionally, the first route advertisement packet is a border gateway protocol (Border Gateway Protocol, BGP) message or an interior gateway protocol (Interior Gateway Protocol, IGP) message.

Optionally, the first route advertisement packet is a BGP update message. The first TLV field and the second TLV field are carried in an extended path attribute field in the BGP update message.

Optionally, the first route advertisement packet is an open shortest path first OSPF message. The first TLV field and the second TLV field are carried in a link state advertisement (Link State Advertisement, LSA) sub-TLV field in the OSPF message.

Optionally, when the first network device obtains a target packet, if a destination address of the target packet matches the routing prefix in the routing entry, the first network device encrypts the target packet by using the at least one key based on an indication of the routing entry.

Optionally, if there is a created tunnel between the first network device and a second network device, the first network device sends an encrypted target packet through the created tunnel. The second network device is a border device in the network indicated by the routing prefix. If there is no created tunnel between the first network device and the second network device, the first network device newly creates a tunnel with the second network device, and sends an encrypted target packet through the newly created tunnel.

Optionally, the first encryption extended information further includes an internet protocol IP address of the second network device. The first network device creates an IPinIP tunnel with the second network device based on the IP address of the second network device and an IP address of the first network device.

Optionally, the first TLV field includes an identifier of one or more network devices, the one or more network devices are devices that need to establish an encrypted connection to the second network device in an encryption network topology, and the second network device is the border device in the network indicated by the routing prefix.

Optionally, the second TLV field indicates the first encryption network topology to which one or more network devices belong and an identifier of the one or more network devices in the first encryption network topology, the one or more network devices are devices that need to establish an encrypted connection to the second network device in the first encryption network topology, and the second network device is the border device in the network indicated by the routing prefix.

Optionally, the second TLV field includes a plurality of bits, one of the plurality of bits indicates at least one network device in the first encryption network topology, and the one or more network devices correspond to one or more bits with preset set states in the plurality of bits.

Optionally, the first TLV field includes a router identifier of the second network device, and the second network device is the border device in the network indicated by the routing prefix. The first network device generates the at least one key based on the router identifier of the second network device and a router identifier of the first network device. Both the router identifier of the second network device and the router identifier of the first network device are unique identifiers.

In this solution, a key is generated based on a router identifier of the network device, so that uniqueness of the key can be ensured, and security of data transmission can be improved.

Optionally, the first network device generates a first security parameter index based on the first TLV field and a local parameter. The first security parameter index indicates an encrypted connection between the first network device and the second network device, the local parameter includes a random number and/or an identifier of the first network device, and the second network device is the border device in the network indicated by the routing prefix. If the first security parameter index is the same as another security parameter index that has been generated on the first network device, the first network device updates the local parameter and generates a second security parameter index based on the first TLV field and an updated local parameter. The first network device sends the updated local parameter to the second network device.

Optionally, the first TLV field further includes a quantum key parameter.

Optionally, the first network device generates second encryption extended information. The second encryption extended information includes a second parameter for key generation and information about a second encryption network topology, and the information about the second encryption network topology indicates a plurality of network devices forming the second encryption network topology and indicates that the plurality of network devices in the second encryption network topology are allowed to establish an encrypted connection. The first network device replaces the first encryption extended information in the first route advertisement packet with the second encryption extended information, to obtain a second route advertisement packet. The first network device sends the second route advertisement packet to a neighbor device.

In this solution, after receiving the route advertisement packet, the network device changes the encryption extended information in the route advertisement packet, so that the network device can establish an encrypted connection to another network device based on an actual requirement, to flexibly manage an encryption network topology.

A second aspect of this application provides a method for distributing encryption information, including: A second network device obtains encryption information related to a service. The encryption information indicates an object to which service encryption is applied. The second network device generates a route advertisement packet based on the encryption information. The route advertisement packet includes a routing prefix and encryption extended information related to the routing prefix, and the encryption extended information includes a parameter for key generation. The second network device sends the route advertisement packet to a neighbor device.

Optionally, the object to which the service encryption is applied indicates an address family or a virtual private network VPN instance for which an encrypted connection needs to be established. The second network device generates the route advertisement packet based on a case that the routing prefix belongs to a network prefix in the address family or the VPN instance. The second network device is a border device in a network indicated by the routing prefix.

Optionally, the object to which the service encryption is applied includes a routing policy, and the routing policy indicates a network device for which an encrypted connection needs to be established. The second network device generates the route advertisement packet based on a case that the second network device belongs to the network device indicated in the routing policy.

A third aspect of this application provides a network device, including: a receiving unit, configured to receive a first route advertisement packet, where the first route advertisement packet includes a routing prefix and first encryption extended information related to the routing prefix, and the first encryption extended information includes a first parameter for key generation; and a generation unit, configured to generate at least one key based on the first encryption extended information, where the at least one key is used to encrypt a data packet from the network device to a network indicated by the routing prefix and/or decrypt a data packet from the network indicated by the routing prefix to the network device, where the generation unit is further configured to generate a routing entry based on the first route advertisement packet, where the routing entry includes the routing prefix, and the routing entry indicates an outbound interface on the network device to the network indicated by the routing prefix and indicates to encrypt, before a data packet whose destination address belongs to the network indicated by the routing prefix is forwarded, the data packet by using the at least one key.

Optionally, the first encryption extended information is carried in a first TLV field in the first route advertisement packet, and the first TLV field includes the first parameter for key generation.

Optionally, the first encryption extended information further includes information indicating a first encryption network topology, and the information about the first encryption network topology indicates a plurality of network devices forming the first encryption network topology and indicates that the plurality of network devices are allowed to establish an encrypted connection.

Optionally, the first encryption extended information is further carried in a second TLV field in the first route advertisement packet, and the second TLV field indicates the information about the first encryption network topology.

Optionally, the first route advertisement packet is a BGP message or an IGP message.

Optionally, the first route advertisement packet is a BGP update message. The first TLV field and the second TLV field are carried in an extended path attribute field in the BGP update message.

Optionally, the first route advertisement packet is an open shortest path first OSPF message. The first TLV field and the second TLV field are carried in a link state advertisement sub-TLV field in the OSPF message.

Optionally, the generation unit is further configured to: when obtaining a target packet, if a destination address of the target packet matches the routing prefix in the routing entry, encrypt the target packet by using the at least one key based on an indication of the routing entry.

Optionally, the network device further includes a sending unit.

If there is a created tunnel between the network device and a second network device, the sending unit is configured to send an encrypted target packet through the created tunnel. The second network device is a border device in the network indicated by the routing prefix.

If there is no created tunnel between the network device and the second network device, the generation unit is configured to newly create a tunnel with the second network device, and the sending unit is configured to send an encrypted target packet through the newly created tunnel.

Optionally, the first encryption extended information further includes an IP address of the second network device. The generation unit is configured to create an IPinIP tunnel with the second network device based on the IP address of the second network device and an IP address of a first network device.

Optionally, the first TLV field includes an identifier of one or more network devices, the one or more network devices are devices that need to establish an encrypted connection to the second network device in an encryption network topology, and the second network device is the border device in the network indicated by the routing prefix.

Optionally, the second TLV field indicates the first encryption network topology to which one or more network devices belong and an identifier of the one or more network devices in the first encryption network topology, the one or more network devices are devices that need to establish an encrypted connection to the second network device in the first encryption network topology, and the second network device is the border device in the network indicated by the routing prefix.

Optionally, the second TLV field includes a plurality of bits, one of the plurality of bits indicates at least one network device in the first encryption network topology, and the one or more network devices correspond to one or more bits with preset set states in the plurality of bits.

Optionally, the first TLV field includes a router identifier of the second network device, and the second network device is the border device in the network indicated by the routing prefix. The generation unit is further configured to generate the at least one key based on the router identifier of the second network device and a router identifier of the first network device. Both the router identifier of the second network device and the router identifier of the first network device are unique identifiers.

Optionally, the generation unit is further configured to: generate a first security parameter index based on the first TLV field and a local parameter, where the first security parameter index indicates an encrypted connection between the network device and the second network device, the local parameter includes a random number and/or an identifier of the first network device, and the second network device is the border device in the network indicated by the routing prefix; and if the first security parameter index is the same as another security parameter index that has been generated in the network device, update the local parameter and generate a second security parameter index based on the first TLV field and an updated local parameter. The sending unit is further configured to send the updated local parameter to the second network device.

Optionally, the first TLV field further includes a quantum key parameter.

Optionally, the generation unit is further configured to generate second encryption extended information, where the second encryption extended information includes a second parameter for key generation and information about a second encryption network topology, and the information about the second encryption network topology indicates a plurality of network devices forming the second encryption network topology and indicates that the plurality of network devices in the second encryption network topology are allowed to establish an encrypted connection; and replace, for the first network device, the first encryption extended information in the first route advertisement packet with the second encryption extended information, to obtain a second route advertisement packet. The sending unit is further configured to send, for the first network device, the second route advertisement packet to a neighbor device.

A fourth aspect of this application provides a network device, including: an obtaining unit, configured to obtain encryption information related to a service, where the encryption information indicates an object to which service encryption is applied; a generation unit, configured to generate a route advertisement packet based on the encryption information, where the route advertisement packet includes a routing prefix and encryption extended information related to the routing prefix, and the encryption extended information includes a parameter for key generation; and a sending unit, configured to send the route advertisement packet to a neighbor device.

Optionally, the object to which the service encryption is applied indicates an address family or a VPN instance for which an encrypted connection needs to be established. The generation unit is further configured to generate the route advertisement packet based on a case that the routing prefix belongs to a network prefix in the address family or the VPN instance. The network device is a border device in a network indicated by the routing prefix.

Optionally, the object to which the service encryption is applied includes a routing policy, and the routing policy indicates a network device for which an encrypted connection needs to be established. The generation unit is further configured to generate the route advertisement packet based on a case that the network device belongs to the network device indicated in the routing policy.

A fifth aspect of this application provides a network device, including a processor and a memory. The memory is configured to store program code, and the processor is configured to invoke the program code in the memory, so that the network device performs the method according to any implementation of the first aspect or the second aspect.

A sixth aspect of this application provides a network system, including the network device according to any implementation of the third aspect and the network device according to any implementation of the fourth aspect.

A seventh aspect of this application provides a computer-readable storage medium, storing instructions. When the instructions are run on a computer, the computer is enabled to perform the method according to any implementation of the first aspect.

An eighth aspect of this application provides a computer program product. When the computer program product is run on a computer, the computer is enabled to perform the method according to any implementation of the first aspect.

A ninth aspect of this application provides a chip, including one or more processors. Some or all of the processors are configured to read and execute computer instructions stored in a memory, to perform the method in any possible implementation of any one of the foregoing aspects. Optionally, the chip further includes the memory. Optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. Optionally, the communication interface is an input/output interface or a bus interface. The method provided in this application is implemented by one chip, or is implemented by a plurality of chips in cooperation.

The solutions provided in the second aspect to the ninth aspect are for implementing or collaboratively implementing the method provided in the first aspect, and therefore, can achieve beneficial effects the same as or corresponding to those in the first aspect. Details are not described herein again.

### BRIEF DESCRIPTION OF DRAWINGS

FIG. 1 is a diagram of a network scenario of an encryption service in a same autonomous system according to an embodiment of this application;
FIG. 2 is a diagram of a network scenario of an encryption service across autonomous systems according to an embodiment of this application;
FIG. 3 is a schematic flowchart of a method for distributing encryption information according to an embodiment of this application;
FIG. 4 is a diagram of a format of a BGP update message according to an embodiment of this application;
FIG. 5 is a diagram of a format of an OSPF internal area prefix link state advertisement (E-Inter-Area-Prefix-LSA) packet according to an embodiment of this application;
FIG. 6 is a diagram of a format of a TLV field in an OSPF E-Inter-Area-Prefix-LSA packet according to an embodiment of this application;
FIG. 7 is a diagram of formats of a first TLV field and a second TLV field according to an embodiment of this application;
FIG. 8 is a diagram of a format of a second TLV field according to an embodiment of this application;
FIG. 9 is a schematic of structures of a plurality of different encryption network topologies according to an embodiment of this application;
FIG. 10 is another schematic flowchart of a method for distributing encryption information according to an embodiment of this application;
FIG. 11 is a diagram of distributing encryption information in a same autonomous system according to an embodiment of this application;
FIG. 12 is a diagram of distributing encryption information between different autonomous systems according to an embodiment of this application;
FIG. 13 is a schematic flowchart in which a transmitter side device advertises a route advertisement packet carrying encryption extended information according to an embodiment of this application;
FIG. 14 is a schematic flowchart in which a receiver side device receives and processes a route advertisement packet carrying encryption extended information according to an embodiment of this application;
FIG. 15 is a schematic flowchart of generating a security parameter index between network devices according to an embodiment of this application;
FIG. 16 is a schematic flowchart of performing re-negotiation when a conflict occurs between SPIs according to an embodiment of this application;
FIG. 17 is a diagram of a structure of a network device 1700 according to an embodiment of this application;
FIG. 18 is a diagram of a structure of a network device 1800 according to an embodiment of this application;
FIG. 19 is a diagram of a structure of a network device 1900 according to an embodiment of this application; and
FIG. 20 is a diagram of a structure of a network device 2000 according to an embodiment of this application.

### DESCRIPTION OF EMBODIMENTS

The following describes embodiments of this application with reference to the accompanying drawings. It is clear that, the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and the like are intended to distinguish between similar objects but do not necessarily indicate a specific order or sequence.

The specific term "example" herein means "used as an example, an embodiment, or an illustration". Any embodiment described as "an example" herein is not necessarily explained as being superior or better than other embodiments.

The following first explains and describes some terms and concepts in embodiments of this application.

### (1) Route advertisement packet

The route advertisement packet is a packet used to advertise a route. Specifically, to implement transmission of a packet between network devices, the network devices need to send route advertisement packets used to advertise routes to each other. For example, a network device A sends, to a network device B, a route advertisement packet carrying routing information of the network device A. After receiving the route advertisement packet from the network device A, the network device B may generate a corresponding route based on the routing information in the route advertisement packet, and transmit a packet to the network device A based on the route.

### (2) Routing prefix

The routing prefix is a network number that uniquely identifies a network connected to the Internet.

### (3) Border gateway protocol (Border Gateway Protocol, BGP)

The BGP is a routing protocol that is of an autonomous system (autonomous system, AS) and that is run on a transmission control protocol (Transmission Control Protocol, TCP). The BGP is used to exchange routing information between different autonomous systems. When two ASs need to exchange routing information, each AS needs to specify a node that runs the BGP to exchange the routing information with the other AS on behalf of the AS. The node in the two ASs that exchanges the information by using the BGP is also referred to as a border gateway (Border Gateway) or a border router (Border Router).

### (4) Interior gateway protocol (Interior Gateway Protocol, IGP)

The IGP is a protocol for exchanging routing information between network devices (for example, gateways or routers) in an autonomous system. The IGP protocol includes a routing information protocol (Routing Information Protocol, RIP), an open shortest path first (Open Shortest Path First, OSPF), an intermediate system-to-intermediate system (Intermediate System-to-Intermediate System, IS-IS) routing protocol, an interior gateway routing protocol (Interior Gateway Routing Protocol), an enhanced interior gateway routing protocol (Enhanced Interior Gateway Routing Protocol, EIGRP), and the like

### (5) Virtual private network instance (Virtual Private Network instance, VPN instance)

The VPN instance is also referred to as a virtual routing forwarding (Virtual Routing Forwarding, VRF) instance. Route isolation between different VPNs is implemented by using the VPN instance. The VPN instance is a dedicated entity established and maintained by a provider edge (Provider Edge, PE) device for a directly connected site. Each site has its own independent VPN instance on the PE device. Each VPN instance on the PE device has an independent route table and a label forwarding information base (Label Forwarding Information Base, LFIB), to ensure independence and security of VPN data.

The foregoing describes terms and concepts in embodiments of this application, and the following describes a scenario to which a method for distributing encryption information provided in embodiments of this application is applied.

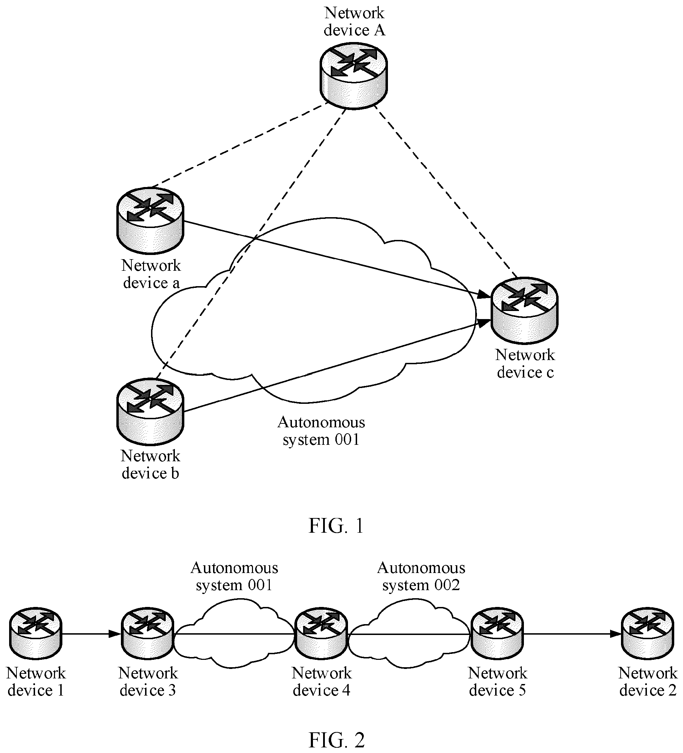

FIG. 1 is a diagram of a network scenario of an encryption service in a same autonomous system according to an embodiment of this application.

As shown in FIG. 1, the network scenario includes a plurality of network devices in the same autonomous system (namely, an autonomous system 001). The plurality of network devices specifically include a network device a, a network device b, a network device c, and a network device A. The network device a and the network device b establish neighbor relationships with the network device c through the network device A. Alternatively, the network device a directly establishes a neighbor relationship with the network device c, and the network device b directly establishes a neighbor relationship with the network device c. For example, the network device a, the network device b, and the network device c are, for example, PE devices, and the network device A is a route reflector (Route Reflector, RR).

In the scenario of transmitting data in the same autonomous system shown in FIG. 1, data packets from the network device a and the network device b to the network device c need to be encrypted for transmission, to ensure data transmission security. That is, in the scenario shown in FIG. 1, service data transmitted between the network devices in the same autonomous system needs to be encrypted.

FIG. 2 is a diagram of a network scenario of an encryption service across autonomous systems according to an embodiment of this application.

As shown in FIG. 2, the network scenario includes a plurality of network devices located in different autonomous systems. The plurality of network devices specifically include a network device 1 to a network device 5. A connection is established between the network device 1 and a network device 2 through a network device 3, a network device 4, and the network device 5, that is, a data packet sent from the network device 1 to the network device 2 needs to pass through the network device 3, the network device 4, and the network device 5. In addition, a data packet between the network device 3 and the network device 4 is transmitted across an autonomous system 001, and a data packet between the network device 4 and the network device 5 is transmitted across an autonomous system 002. For example, the network device 1 and the network device 2 are, for example, customer edge (Customer Edge, CE) devices, and the network device 3, the network device 4, and the network device 5 are PE devices.

In the scenario of transmitting data across the autonomous systems shown in FIG. 2, both the data packet from the network device 3 to the network device 4 and the data packet from the network device 4 to the network device 5 need to be encrypted for transmission, to ensure data transmission security. That is, in the scenario shown in FIG. 2, service data transmitted between the network devices across the autonomous systems needs to be encrypted.

Encrypted data transmitted between the network devices in different scenarios is described above by using the scenario of transmitting data in the same autonomous system and the scenario of transmitting data across the autonomous systems in FIG. 1 and FIG. 2 as examples. During actual application, data may also need to be encrypted for transmission between network devices in another scenario, and a specific scenario is not limited in this embodiment.

The foregoing describes the scenarios to which the method provided in embodiments of this application is applied. The following describes a method for distributing encryption information provided in embodiments of this application.

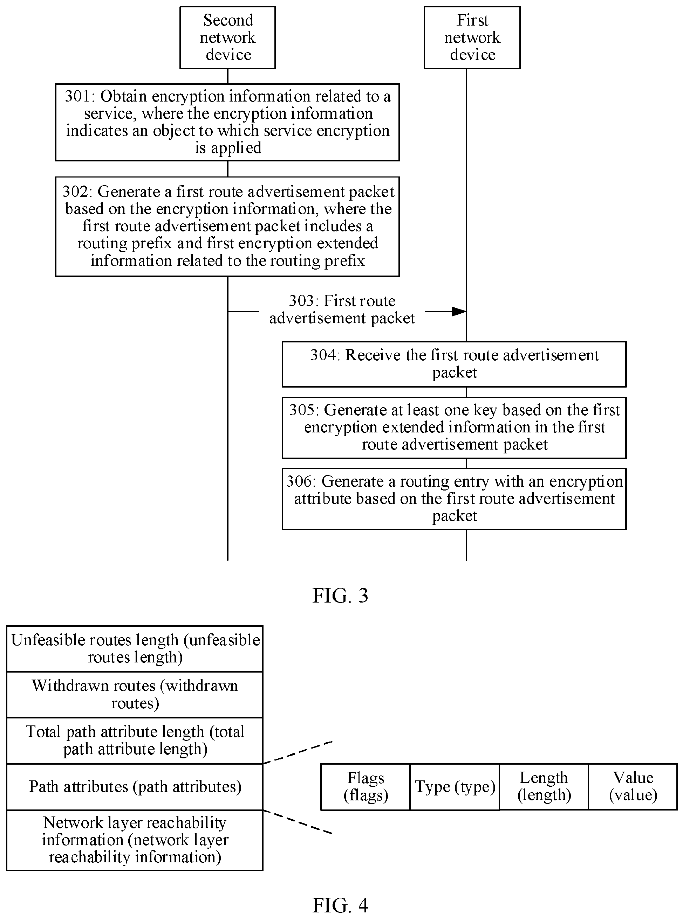

FIG. 3 is a schematic flowchart of a method for distributing encryption information according to an embodiment of this application. The method shown in FIG. 3 is applicable to any two path-reachable network devices in a data communication network, to distribute encryption information between the network devices, so as to ensure that encrypted transmission of service data can be implemented between the network devices.

As shown in FIG. 3, the method for distributing encryption information is applied to a first network device and a second network device. The second network device is configured to: generate a route advertisement packet carrying encryption extended information, and send the route advertisement packet to the first network device. The first network device is configured to: receive the route advertisement packet from the second network device, and generate a routing entry based on a routing prefix and the encryption extended information in the route advertisement packet, so that the first network device can encrypt, based on an indication of the routing entry, a to-be-sent data packet before sending the data packet to the second network device and send an encrypted data packet to the second network device.

Optionally, the first network device and the second network device are, for example, physical devices such as routers, switches, or gateways, or virtual devices that support packet forwarding. Specific implementation forms of the first network device and the second network device are not limited in this embodiment.

Specifically, the method for distributing encryption information shown in FIG. 3 includes the following steps 301 to 305.

Step 301: The second network device obtains encryption information related to a service, where the encryption information indicates an object to which service encryption is applied.

In this embodiment, the encryption information obtained by the second network device indicates objects to which service encryption is applied, that is, indicates objects on which service encryption needs to be performed. Based on the obtained encryption information, the second network device can determine whether a currently executed service needs to be encrypted.

For example, the object to which the service encryption is applied includes an address family or a VPN instance for which an encrypted connection needs to be established. Before advertising a route advertisement packet, the second network device advertises and determines whether a routing prefix in the to-be-advertised route advertisement packet belongs to a network prefix in the address family or the VPN instance, to determine whether a service related to the routing prefix needs to be encrypted. For another example, the object to which the service encryption is applied includes a routing policy. The routing policy indicates a network device for which an encrypted connection needs to be established. For example, the routing policy indicates an identifier or an address of the network device for which the encrypted connection needs to be established. In this way, the second network device may determine, by determining whether an identifier or an address of the device belongs to the identifier or the address of the network device indicated in the routing policy, whether the service currently executed by the second network device needs to be encrypted.

Optionally, the encryption information in the second network device is preconfigured through a controller or is transferred by another network device in a network system to the second network device. Alternatively, the encryption information in the second network device is manually configured on the second network device by management personnel. A specific manner of obtaining the encryption information by the second network device is not limited in this embodiment.

Step 302: The second network device generates a first route advertisement packet based on the encryption information, where the first route advertisement packet includes a routing prefix and first encryption extended information related to the routing prefix, and the first encryption extended information includes a first parameter for key generation.

When the second network device determines, based on the encryption information, that the service executed by the second network device needs to be encrypted, the second network device generates the first route advertisement packet carrying the first encryption extended information. The first encryption extended information carried in the first route advertisement packet is related to the routing prefix in the first route advertisement packet, that is, a packet to the routing prefix needs to be encrypted for transmission based on content indicated by the first encryption extended information. In addition, the second network device is a border device in a network indicated by the routing prefix in the first route advertisement packet, and is configured to be responsible for packet forwarding between the network indicated by the routing prefix and another network.

Optionally, when the object to which the service encryption is applied includes an address family or a VPN instance for which an encrypted connection needs to be established, the second network device generates the first route advertisement packet based on a case that the routing prefix belongs to a network prefix in the address family or the VPN instance. Alternatively, when the object to which the service encryption is applied includes a routing policy, and the routing policy indicates a network device for which an encrypted connection needs to be established, the second network device generates the first route advertisement packet based on a case that the second network device is the network device indicated in the routing policy.

Step 303: The second network device sends the first route advertisement packet to a neighbor device.

After generating the first route advertisement packet, the second network device sends the first route advertisement packet to a connected neighbor device. In addition, after receiving the first route advertisement packet, optionally, the neighbor device of the second network device further continues to forward the first route advertisement packet to another neighbor device, to propagate the first route advertisement packet in the entire data communication network.

Step 304: The first network device receives the first route advertisement packet.

In this embodiment, optionally, the first network device is, for example, a neighbor device of the second network device, that is, the first network device receives the first route advertisement packet from the second network device. Optionally, the first network device may alternatively not be a neighbor device of the second network device, that is, another network device is further connected between the first network device and the second network device. The first network device receives, from a neighbor device of the first network device, the first route advertisement packet from the second network device.

Step 305: The first network device generates at least one key based on the first encryption extended information in the first route advertisement packet.

Because the first encryption extended information in the first route advertisement packet includes the first parameter for key generation, the first network device can generate the at least one key based on the first parameter in the first encryption extended information. The at least one key generated by the first network device is used to encrypt a data packet from the first network device to the network indicated by the routing prefix in the first route advertisement packet. Alternatively, the at least one key is used to decrypt a data packet from the network indicated by the routing prefix to the first network device. Alternatively, the at least one key generated by the first network device can be used to encrypt a data packet from the first network device to the network indicated by the routing prefix and can also be used to decrypt a data packet from the network indicated by the routing prefix to the first network device.

For example, in the first encryption extended information, the first parameter for key generation includes one or more of the following parameters: a random number used to calculate the key, an identifier of the second network device, a security protocol type, a packet encapsulation mode, a verification algorithm, and an encryption algorithm. Based on the first parameter in the first encryption extended information, the first network device can generate the at least one key by using the encryption algorithm and an encryption parameter that are specified in the first parameter.

Step 306: The first network device generates a routing entry based on the first route advertisement packet, where the routing entry includes the routing prefix in the first route advertisement packet, and the routing entry indicates an outbound interface on the first network device to the network indicated by the routing prefix and indicates to encrypt, before a data packet whose destination address belongs to the network indicated by the routing prefix is forwarded, the data packet by using the at least one key.

Because the first route advertisement packet includes both the routing prefix and the first encryption extended information related to the routing prefix, the first network device generates the routing entry with an encryption attribute based on the first route advertisement packet. The routing entry with the encryption attribute not only indicates how the first network device forwards the data packet to the network indicated by the routing prefix, but also indicates that the first network device needs to encrypt, by using the at least one key, the data packet to the network indicated by the routing prefix.

It should be noted that the foregoing steps 301 to 306 describe a case that the second network device sends a route advertisement packet to the first network device, so that the first network device generates a routing entry with an encryption attribute, to ensure that the first network device can send an encrypted data packet to the second network device. During actual application, the first network device may alternatively send, to the second network device, a route advertisement packet carrying encryption extended information, so that the second network device can also send an encrypted data packet to the first network device. A specific process in which the first network device sends a route advertisement packet carrying encryption extended information to the second network device, and the second network device generates, based on the received route advertisement packet, a routing entry with an encryption attribute is similar to the foregoing steps 301 to 306. Details are not described again in this embodiment.

In this embodiment, a route advertisement packet carries both a routing prefix and encryption extended information related to the routing prefix, so that a network device that receives the route advertisement packet can generate a key based on the encryption extended information in the route advertisement packet and generate a routing entry with an encryption attribute. The routing entry can indicate the network device to encrypt data by using the key and then send encrypted data to a network indicated by the routing prefix, to implement encrypted transmission of data between network devices.

In conclusion, in this embodiment, transfer of encryption information between a plurality of network devices is implemented based on the route advertisement packet, and the network device is guided to generate the routing entry with the encryption attribute, so as to ensure that the network device can implement encrypted transmission of a data packet based on the routing entry, without establishing a dedicated encryption tunnel between the network devices. This effectively reduces network deployment complexity.

The foregoing describes a process in which the second network device includes the first encryption extended information in the first route advertisement packet, so that the first network device can generate the routing entry with the encryption attribute based on the first encryption extended information after receiving the first route advertisement packet. For ease of understanding, the following describes in detail how to include the first encryption extended information in the first route advertisement packet.

Optionally, in the first encryption extended information, in addition to the foregoing first parameter for key generation, the first encryption extended information further includes information about a first encryption network topology. The information about the first encryption network topology indicates a plurality of network devices forming the first encryption network topology and indicates that the plurality of network devices are allowed to establish an encrypted connection.

It should be understood that a data communication network in which the first network device and the second network device are located may include a large quantity of network devices. However, in some actual service scenarios, an encrypted connection usually needs to be established between only some network devices in the data communication network. In this case, for ease of management, some network devices that expect to establish an encrypted connection with each other are grouped into an encryption network topology, and a plurality of network devices in a same encryption network topology are allowed to establish an encrypted connection.

In other words, the information about the first encryption network topology is indicated in the first encryption extended information, so that the first encryption network topology in which the second network device is located can be indicated, and another network device in the first encryption network topology is allowed to establish an encrypted connection to the second network device.

The following describes a specific implementation in which the first encryption extended information carries the first parameter for key generation and indicates the information about the first encryption network topology.

Implementation 1: The first encryption extended information is carried in a first type length value (type length value, TLV) field in the first route advertisement packet.

The first TLV field includes the first parameter for key generation and the information about the first encryption network topology. For example, the first TLV field includes an identifier of one or more network devices. The one or more network devices are devices that need to establish an encrypted connection to the second network device in the first encryption network topology. That is, in the implementation 1, an identifier of a network device is carried in the first TLV field, to specify a device that needs to establish an encrypted connection to the second network device. In this way, when any network device receives the first route advertisement packet from the second network device, the network device only needs to determine whether an identifier of the device is in one or more identifiers indicated by the first TLV field, and may determine whether an encrypted connection needs to be established to the second network device.

For example, when the second network device is in a BGP network, the identifier of the one or more network devices included in the first TLV field is, for example, a BGP router identifier of the network device. In addition, the identifier of the one or more network devices included in the first TLV field may alternatively be an identifier of another type. This is not specifically limited herein.

Implementation 2: The first encryption extended information is carried in a first TLV field and a second TLV field in the first route advertisement packet.

The first TLV field includes the first parameter for key generation, and the second TLV field indicates the information about the first encryption network topology. In other words, the first TLV field in the first route advertisement packet is used to transfer a parameter for generating a key, and the second TLV field is used to manage an encryption network topology.

For example, the second TLV field indicates the first encryption network topology to which one or more network devices belong and an identifier of the one or more network devices in the first encryption network topology. That is, the second TLV field indicates that the one or more network devices belong to the first encryption network topology and also indicates the identifier of the one or more network devices in the first encryption network topology. The one or more network devices indicated by the second TLV field are devices that need to establish an encrypted connection to the second network device in the first encryption network topology.

Optionally, the second TLV field includes a plurality of bits, and one of the plurality of bits indicates at least one network device in the first encryption network topology. The one or more network devices in the first encryption network topology indicated by the second TLV field correspond to one or more bits with preset set states in the plurality of bits. The preset set state may mean that a bit is set (that is, a value of the bit is 1), that is, a network device corresponding to a set bit in the plurality of bits is a network device that needs to establish an encrypted connection to the second network device in the first encryption network topology. Alternatively, the preset set state may mean that a bit is not set (that is, a value of the bit is 0), that is, a network device corresponding to an unset bit in the plurality of bits is a network device that needs to establish an encrypted connection to the second network device in the first encryption network topology. The preset set state is not specifically limited in this embodiment.

In addition, a bit in the second TLV field may indicate at least one network device. When there are robust bits in the second TLV field, some bits in the second TLV field may alternatively not indicate the network device.

For example, it is assumed that the second TLV field includes six bits. If the first encryption network topology includes six network devices, and all the six network devices need to establish an encrypted connection to the second network device, each bit in the second TLV field indicates one network device, and the six bits each are set to 1.

For another example, it is assumed that the second TLV field includes six bits. If the first encryption network topology includes 12 network devices, and all the 12 network devices need to establish an encrypted connection to the second network device, each bit in the second TLV field indicates two network devices, and the six bits each are set to 1. For still another example, it is assumed that the second TLV field includes six bits. If the first encryption network topology includes three network devices that need to establish an encrypted connection relationship with the second network device, each of the first three bits in the second TLV field may indicate one network device, and the first three bits in the second TLV field each are set to 1.

Optionally, in the implementation 1 and the implementation 2, the first TLV field includes the first parameter for key generation, and the first parameter specifically includes a router identifier of the second network device.

In a process in which the first network device generates the at least one key based on the first encryption extended information, the first network device generates the at least one key based on the router identifier of the second network device and a router identifier of the first network device. Both the router identifier of the second network device and the router identifier of the first network device are unique identifiers.

Because both the router identifiers of the first network device and the second network device are unique identifiers in the data communication network, generating the key based on the router identifiers of the two network devices can ensure uniqueness of the generated key, so as to ensure security of encrypted transmission.

It should be noted that in the process in which the first network device generates the at least one key, in addition to the router identifier of the second network device and the router identifier of the first network device, the first network device may further generate the at least one key based on another parameter. For example, the first network device generates the at least one key based on the random number in the first TLV field, a random number generated by the first network device, the router identifier of the first network device, and the router identifier of the second network device. A manner of generating the key by the first network device is not specifically limited in this embodiment.

Optionally, the first TLV field further includes a quantum key parameter, for example, a quantum key distribution (quantum key distribution, QKD) key identifier. In this way, after the first network device obtains the first TLV field in the first route advertisement packet, the first network device sends the QKD key identifier in the first TLV field to a quantum key transmission network, to request to obtain a quantum key from the quantum key transmission network. After the quantum key transmission network returns the quantum key to the first network device, the first network device encrypts, by using the quantum key, data to the second network device.

In some optional embodiments, after establishing an encrypted connection, the first network device and the second network device usually further need to generate security parameter indexes (security parameter indexes, SPIs), to indicate the encrypted connection between the first network device and the second network device. For example, for the first network device, the security parameter index generated by the first network device is generated based on content in the first TLV field and a local parameter of the first network device.

However, when the first network device needs to establish encrypted connections to a plurality of other network devices, security parameter indexes generated by the first network device for different encrypted connections may be the same. Therefore, this embodiment provides a manner of resolving an SPI conflict.

For example, after the first network device receives the first route advertisement packet, the first network device generates a first security parameter index based on the first TLV field and a local parameter of the first network device. The first security parameter index indicates an encrypted connection between the first network device and the second network device. The local parameter includes a random number and/or an identifier of the first network device.

If the first security parameter index is the same as another security parameter index that has been generated on the first network device, the first network device updates the local parameter, and generates a second security parameter index based on the first TLV field and an updated local parameter. The second security parameter index indicates the encrypted connection between the first network device and the second network device, and the second security parameter index is different from another security parameter index that has been generated in the first network device.

Then, the first network device sends the updated local parameter to the second network device, so that the second network device can also regenerate a corresponding security parameter index.

The foregoing describes a case that the first encryption extended information is carried in the first TLV field and the second TLV field in the first route advertisement packet. The following describes the first route advertisement packet in detail with reference to a specific application scenario.

Optionally, when the data communication network in which the second network device is located is a BGP network or an IGP network, the first route advertisement packet sent by the second network device is, for example, a BGP message or an IGP message.

For example, the first route advertisement packet is a BGP update message. The first TLV field and the second TLV field are carried in an extended path attribute field in the BGP update message. FIG. 4 is a diagram of a format of a BGP update message according to an embodiment of this application. The BGP update message includes a plurality of fields: an unfeasible routes length (unfeasible routes length) field, a withdrawn routes (withdrawn routes) field, a total path attribute length (total path attribute length) field, a path attributes (path attributes) field, and a network layer reachability information (network layer reachability information, NLRI) field. The unfeasible routes length field indicates a length of the withdrawn routes field. The withdrawn routes field indicates an unreachable route, including a network prefix of a to-be-withdrawn unreachable route. The path attribute length field indicates a length of the path attributes field. The path attributes field indicates an attribute list of a path related to the NLRI field. Generally, the path attributes field fills all attributes of the path related to the NLRI field in a sequence of type numbers of various attributes. The NLRI field indicates network layer reachability information, including a to-be-advertised routing prefix.

In this embodiment, the path attributes field is extended, so that the first TLV field and the second TLV field are carried in the extended path attribute field in the BGP update message. The extended path attribute field includes a flags (flags) field, a type (type) field, a length (length) field, and a value (value) field. The first TLV field and the second TLV field each include a type (type) field, a length (length) field, and a value (value) field.

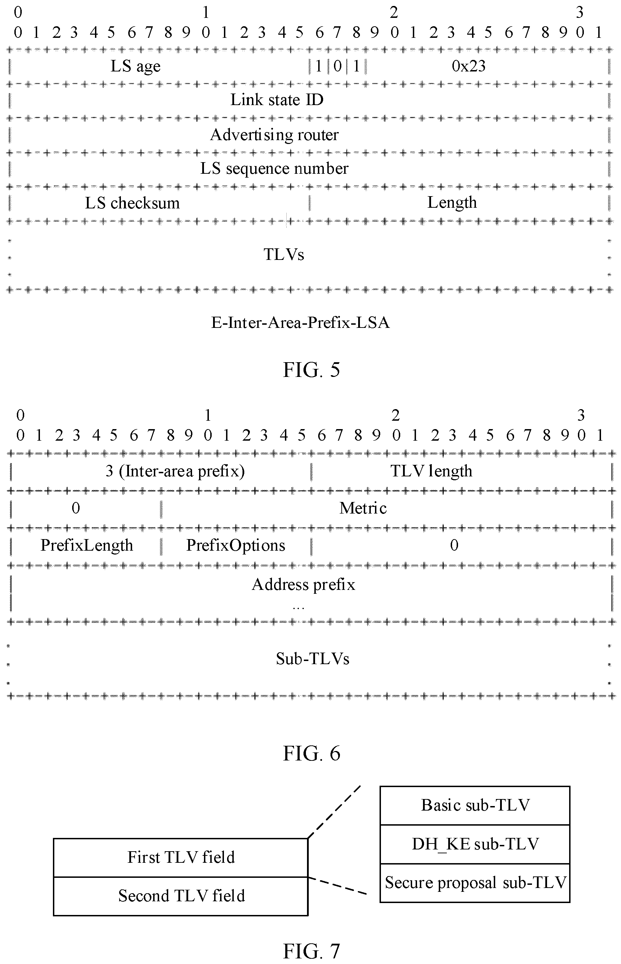

For example, the first route advertisement packet is an OSPF message. The first TLV field and the second TLV field are carried in a link state advertisement (Link State Advertisement, LSA) sub-TLV field in the OSPF message. FIG. 5 is a diagram of a format of an OSPF internal area prefix link state advertisement (E-Inter-Area-Prefix-LSA) packet according to an embodiment of this application. The OSPF message includes a plurality of fields: an LSA age (LS Age) field, a link state id (link state id) field, an advertising router (advertising router) field, a sequence number (LS sequence number) field, an LSA checksum (LS checksum) field, a length field, and a TLV field.

FIG. 6 is a diagram of a format of a TLV field in an OSPF E-Inter-Area-Prefix-LSA packet according to an embodiment of this application. As shown in FIG. 6, the TLV field in the OSPF E-Inter-Area-Prefix-LSA packet further specifically includes the following fields: an inter-area prefix (inter-area prefix) field, a TLV length field, a metric (metric) field, a prefix length (prefix length) field, a prefix options (prefix options) field, an address prefix (address prefix) field, and a sub-TLVs (sub-TLVs) field.

In this embodiment, the sub-TLVs field of the TLV field in the OSPF E-Inter-Area-Prefix-LSA packet is extended, and the first TLV field and the second TLV field are carried in the sub-TLVs field, so that the sub-TLVs field is extended to carry the first TLV field and the second TLV field in the OSPF message.

In addition, the encryption extended information carried in the first TLV field and the second TLV field has an optional (Optional) attribute and a transit (Transit) attribute, that is, the second network device can choose whether to add the encryption extended information to the route advertisement packet. In addition, the first network device can choose to transparently transmit the route advertisement packet carrying the encryption extended information.

For example, FIG. 7 is a diagram of formats of a first TLV field and a second TLV field according to an embodiment of this application. As shown in FIG. 7, in the BGP update message or the OSPF message, the first TLV field is used to transfer an encryption-related parameter. The first TLV field includes a basic sub-TLV (basic sub-TLV), a key exchange algorithm-key exchange sub-TLV (Diffie-Hellman Key exchange sub-TLV, DH_KE sub-TLV), and a secure proposal sub-TLV (secure proposal sub-TLV). The second TLV field is used to manage an encryption network topology, so as to adapt to any encryption topology in a data communication network, and improve network deployment flexibility.

The basic sub-TLV includes or carries, for example, a random number and identification information related to a network device that are used to calculate a key. Specifically, the identification information related to the network device includes but is not limited to the following plurality of types of identifiers: an IP address of the second network device, a router identifier of the second network device, a QKD key identifier used for quantum encryption, and a count used to identify key update (rekey).

The DH_KE sub-TLV includes: a key exchange algorithm group identifier and exchange data of a key exchange algorithm.

The secure proposal sub-TLV includes: a security protocol type, a packet encapsulation mode, a verification algorithm, and an encryption algorithm.

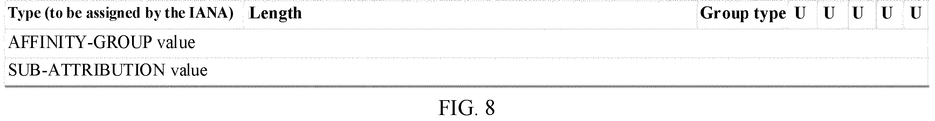

The second TLV field includes: a topology group identifier (that is, the identifier of the first encryption network topology), a topology group type, and a topology group attribute value. Based on a plurality of fields in the second TLV field, the encryption network topology can be flexibly managed. For example, FIG. 8 is a diagram of a format of a second TLV field according to an embodiment of this application.

The topology group identifier indicates an encryption network topology in which a network device that needs to establish an encrypted connection to the second network device is located.

Type shown in FIG. 8 is a topology group type, and the topology group type indicates a type of the encryption network topology. For example, when the topology group type is 0, it indicates that the type of the encryption network topology is no sub-attribution (no sub-attribution). For another example, when the topology group type is 1, it indicates that the type of the encryption network topology is hub-spoke sub-attribution (hub-spoke sub-attribution). For still another example, when the topology group type is 2, it indicates that the type of the encryption network topology is bitmap sub-attribution (bitmap sub-attribution).

Group type shown in FIG. 8 is the topology group type, and a topology group attribute value indicates specific attribute information in the encryption network topology. For example, the topology group attribute value indicates an affinity-group (affinity-group) attribute (that is, an AFFINITY-GROUP value shown in FIG. 8) in the encryption network topology, and the affinity-group attribute indicates a network device that needs an encrypted connection in a same encryption network topology. In addition, the affinity-group attribute may alternatively have a corresponding sub-attribute (that is, a SUB-ATTRIBUTION value shown in FIG. 8), and the sub-attribute of the affinity-group attribute indicates a specific network device that needs an encrypted connection.

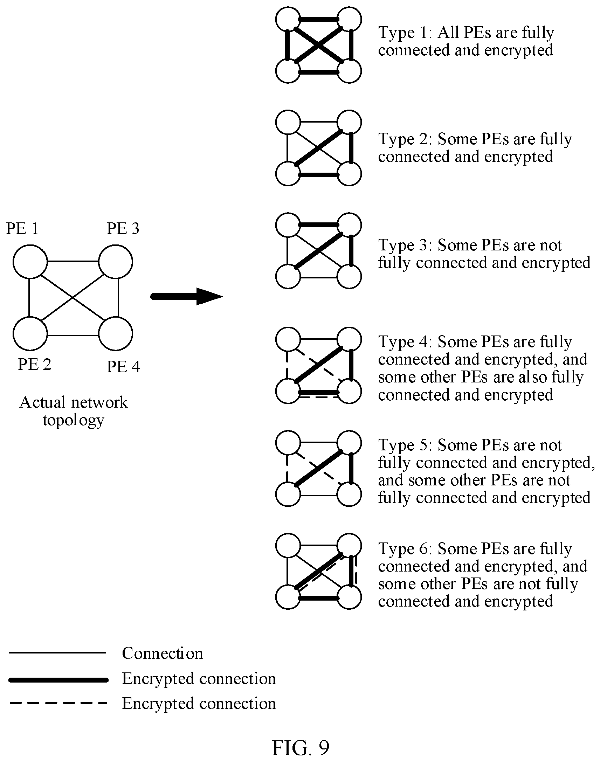

For example, FIG. 9 is a schematic of structures of a plurality of different encryption network topologies according to an embodiment of this application. As shown in FIG. 9, in an actual network topology, a PE 1, a PE 2, a PE 3, and a PE 4 are connected to each other. However, during actual application, the PE 1, the PE 2, the PE 3, and the PE 4 can form different encryption network topologies based on different service requirements. A type 1 to a type 6 in FIG. 9 represent different encryption network topologies.

In the type 1, the PE 1, the PE 2, the PE 3, and the PE 4 form an encryption network topology, and the PE 1, the PE 2, the PE 3, and the PE 4 are fully connected and encrypted, that is, any PE is in an encrypted connection to all other PEs.

In a type 2, the PE 2, the PE 3, and the PE 4 form an encryption network topology, and the PE 2, the PE 3, and the PE 4 are fully connected and encrypted, that is, any PE of the PE 2, the PE 3, and the PE 4 is in an encrypted connection to all other PEs. For the encryption network topology shown in the type 2, a topology group attribute value in a second TLV field indicates an affinity-group attribute, and the PE 2, the PE 3, and the PE 4 carry a same affinity-group value.

In a type 3, the PE 1, the PE 2, the PE 3, and the PE 4 form an encryption network topology, and the PE 1, the PE 2, and the PE 4 each are in an encrypted connection to the PE3. For the encryption network topology shown in the type 3, a topology group attribute value in a second TLV field indicates an affinity-group attribute, and the affinity-group attribute further has a sub-attribute.

Specifically, the PE 1, the PE 2, the PE 3, and the PE 4 carry a same affinity-group value. In addition, in a route advertisement packet generated by the PE 3, the sub-attribute of the affinity-group attribute in the second TLV field is 111, indicating that the PE 3 needs to be in an encrypted connection to the PE 1, the PE 2, and the PE 4. In addition, in a route advertisement packet generated by the PE 1, the sub-attribute of the affinity-group attribute in the second TLV field is 001, indicating that the PE 1 needs to be in an encrypted connection to the PE 3. In addition, in a route advertisement packet generated by the PE 2, the sub-attribute of the affinity-group attribute in the second TLV field is 010, indicating that the PE 2 needs to be in an encrypted connection to the PE 3. In addition, in a route advertisement packet generated by the PE 4, the sub-attribute of the affinity-group attribute in the second TLV field is 100, indicating that the PE 4 needs to be in an encrypted connection to the PE 3.

Alternatively, the PE 1, the PE 2, the PE 3, and the PE 4 carry a same affinity-group value. In addition, in a route advertisement packet generated by the PE 3, the sub-attribute of the affinity-group attribute in the second TLV field is hub, indicating that the PE 3 is a backbone node. In addition, in route advertisement packets generated by the PE 1, the PE 2, and the PE 4, the sub-attribute of the affinity-group attribute in the second TLV field is spoke, indicating that the PE 1, the PE 2, and the PE 4 are branch nodes.

In a type 4, the PE 1, the PE 2, and the PE 4 form an encryption network topology A, and the PE 1, the PE 2, and the PE 4 are fully connected and encrypted. The PE 2, the PE 3, and the PE 4 form an encryption network topology B, and the PE 2, the PE 3, and the PE 4 are fully connected and encrypted. For the encryption network topology shown in the type 4, a topology group attribute value in a second TLV field indicates an affinity-group attribute. In route advertisement packets sent by the PE 1, the PE 2, and the PE 4 to another PE in the encryption network topology A, an affinity-group value is A. In route advertisement packets sent by the PE 2, the PE 3, and the PE 4 to another PE in the encryption network topology B, an affinity-group value is B.

In a type 5, the PE 1, the PE 2, and the PE 4 form an encryption network topology A, and the PE 1 is in an encrypted connection to both the PE 2 and the PE 4. The PE 2, the PE 3, and the PE 4 form an encryption network topology B, and the PE 3 is in an encrypted connection to both the PE 2 and the PE 4.

For the encryption network topology shown in the type 5, in a route advertisement packet sent by the PE 1 to a network device in the encryption network topology A, an affinity-group value in a second TLV field is A, and a sub-attribute of an affinity-group attribute is 11, indicating that the PE 1 needs to be in an encrypted connection to the PE 2 and the PE 4. In a route advertisement packet sent by the PE 2 to the network device in the encryption network topology A, an affinity-group value in a second TLV field is A, and a sub-attribute of an affinity-group attribute is 01, indicating that the PE 2 needs to be in an encrypted connection to the PE 1. In a route advertisement packet sent by the PE 4 to the network device in the encryption network topology A, an affinity-group value in a second TLV field is A, and a sub-attribute of an affinity-group attribute is 10, indicating that the PE 4 needs to be in an encrypted connection to the PE 1.

In addition, in a route advertisement packet sent by the PE 3 to a network device in the encryption network topology B, an affinity-group value in a second TLV field is B, and a sub-attribute of an affinity-group attribute is 11, indicating that the PE 3 needs to be in an encrypted connection to the PE 2 and the PE 4. In a route advertisement packet sent by the PE 2 to the network device in the encryption network topology B, an affinity-group value in a second TLV field is B, and a sub-attribute of an affinity-group attribute is 01, indicating that the PE 2 needs to be in an encrypted connection to the PE 3. In a route advertisement packet sent by the PE 4 to the network device in the encryption network topology B, an affinity-group value in a second TLV field is B, and a sub-attribute of an affinity-group attribute is 10, indicating that the PE 4 needs to be in an encrypted connection to the PE 3.

In the type 6, the PE 2, the PE 3, and the PE 4 form an encryption network topology A on a service A, and the PE 2, the PE 3, and the PE 4 are fully connected and encrypted. The PE 2, the PE 3, and the PE 4 form an encryption network topology B on a service B, and the PE 3 is in an encrypted connection to both the PE 2 and the PE 4.

For example, in the type 6, for the VPN service A, in route advertisement packets sent by the PE 2, the PE 3, and the PE 4 to a network device in the encryption network topology A, an affinity-group value in a second TLV field is A. For the VPN service B, a route advertisement packet sent by the PE 3 to a network device in the encryption network topology B, an affinity-group value in a second TLV field is B, and a sub-attribute of an affinity-group attribute is 11, indicating that the PE 3 needs to be in an encrypted connection to the PE 2 and the PE 4. In a route advertisement packet sent by the PE 2 to the network device in the encryption network topology B, an affinity-group value in a second TLV field is B, and a sub-attribute of an affinity-group attribute is 01, indicating that the PE 2 needs to be in an encrypted connection to the PE 3. In a route advertisement packet sent by the PE 4 to the network device in the encryption network topology B, an affinity-group value in a second TLV field is B, and a sub-attribute of an affinity-group attribute is 10, indicating that the PE 4 needs to be in an encrypted connection to the PE 3.

The foregoing describes how to include the first encryption extended information in the first route advertisement packet. The following describes in detail how the first network device sends an encrypted packet to the second network device when obtaining a packet to the second network device.

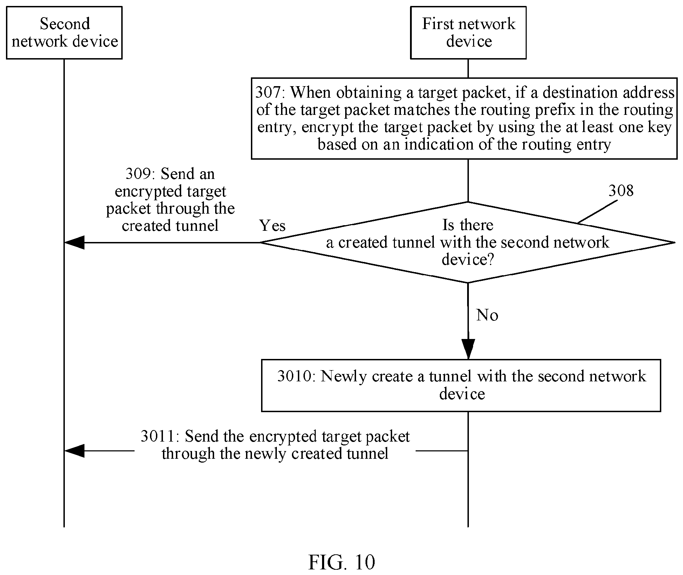

Optionally, FIG. 10 is another schematic flowchart of a method for distributing encryption information according to an embodiment of this application. As shown in FIG. 10, in the embodiment shown in FIG. 3, after the first network device generates the routing entry based on the first route advertisement packet, the first network device further performs the following steps 307 to 3011.

Step 307: When the first network device obtains a target packet, if a destination address of the target packet matches the routing prefix in the routing entry, the first network device encrypts the target packet by using the at least one key based on an indication of the routing entry.

The target packet is a to-be-forwarded packet received by the first network device.

In this step, if the destination address of the target packet matches the routing prefix in the routing entry, it indicates that the target packet is a packet to the second network device. Therefore, the first network device encrypts the target packet by using the at least one pre-generated key based on the indication of the routing entry.

Step 308: Determine whether there is a created tunnel between the first network device and the second network device.

In this step, after encrypting the target packet, the first network device needs to determine whether the first network device already has a tunnel to the second network device, for example, a VPN tunnel.

Step 309: If there is the created tunnel between the first network device and the second network device, the first network device sends an encrypted target packet through the created tunnel.

Because the packet transmitted by the first network device to the second network device has been encrypted by using the pre-generated key, security of data transmission between the first network device and the second network device can be ensured. When there is the created tunnel between the first network device and the second network device, the first network device sends the encrypted target packet to the second network device through the created tunnel, without creating a dedicated encryption tunnel.

Step 3010: If there is no created tunnel between the first network device and the second network device, the first network device newly creates a tunnel with the second network device.

Step 3011: The first network device sends an encrypted target packet through the newly created tunnel.

For example, the first encryption extended information further includes an internet protocol IP address of the second network device. The first network device creates an IPinIP tunnel with the second network device based on the IP address of the second network device and an IP address of the first network device, that is, the newly created tunnel is the IPinIP tunnel. The IPinIP tunnel is a three-layer tunnel, and an original IP packet is encapsulated into a new IP packet to create a tunnel for transmission.

Optionally, after the first network device receives the first route advertisement packet, the first network device continues to forward the first route advertisement packet to another network device, so that the first route advertisement packet is continuously transferred in the data communication network.

For example, after receiving the first route advertisement packet, the first network device determines whether the first route advertisement packet needs to be changed. If the first network device needs to establish a new encrypted connection to another network device, the first network device needs to change the first encryption extended information in the first route advertisement packet, so that the another network device can establish an encrypted connection to the first network device. If the first network device does not need to establish a new encrypted connection to another network device, the first network device does not need to change the first encryption extended information in the first route advertisement packet, but forwards the first route advertisement packet to the another network device, so that the another network device can establish an encrypted connection to the second network device.

If the first network device needs to change the first encryption extended information in the first route advertisement packet, the first network device generates second encryption extended information. The second encryption extended information includes a second parameter for key generation and information about a second encryption network topology. The information about the second encryption network topology indicates a plurality of network devices forming the second encryption network topology and indicates that the plurality of network devices in the second encryption network topology are allowed to establish an encrypted connection. In addition, the first network device replaces the first encryption extended information in the first route advertisement packet with the second encryption extended information to obtain a second route advertisement packet, and then the first network device sends the second route advertisement packet to the neighbor device.

If the first network device does not need to change the first encryption extended information in the first route advertisement packet, the first network device forwards the received first route advertisement packet to the neighbor device of the first network device, without changing the first encryption extended information in the first route advertisement packet.

The foregoing describes the method for distributing encryption information provided in this embodiment of this application. For ease of understanding, the following describes in detail an execution process of the method for distributing encryption information provided in this embodiment of this application with reference to specific examples.

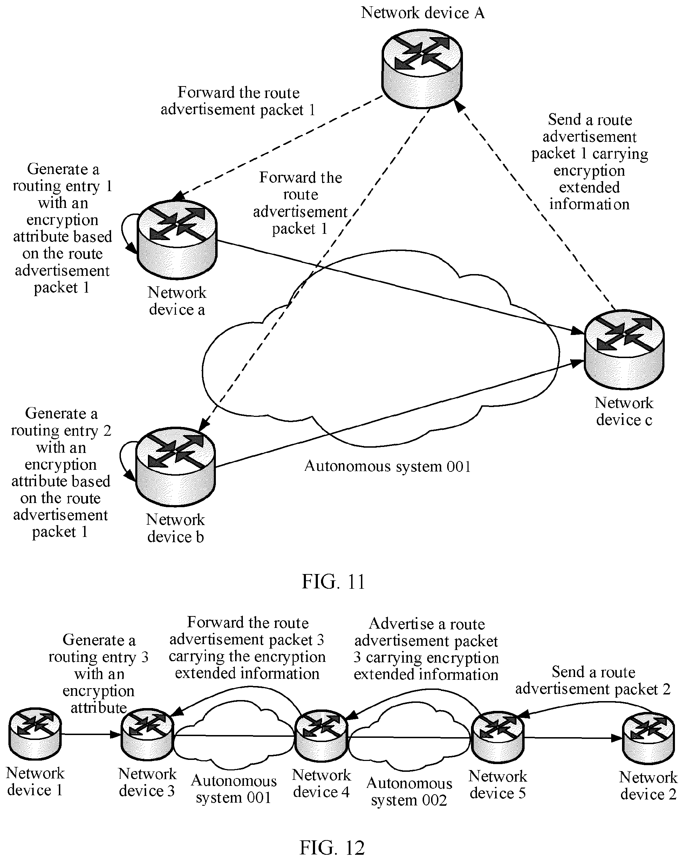

FIG. 11 is a diagram of distributing encryption information in a same autonomous system according to an embodiment of this application. In FIG. 11, data packets from a network device a and a network device b to a network device c need to be encrypted for transmission, to ensure data transmission security.

First, attributes of encryption network topologies are configured on the network device a, the network device b, and the network device c. The attribute of the encryption network topology of the network device a and the network device b is a spoke attribute, that is, the network device a and the network device b are branch nodes. The attribute of the encryption network topology of the network device c is a hub attribute, that is, the network device c is a backbone node.

Then, the network device c sends a route advertisement packet 1 carrying encryption extended information to a network device A. The route advertisement packet 1 further carries a routing prefix related to the encryption extended information, and the network device c is a border device in a network indicated by the routing prefix 1.

After receiving the route advertisement packet 1 sent by the network device c, the network device A identifies that the route advertisement packet 1 has a transit attribute. Therefore, the network device A forwards the route advertisement packet 1 to the network device a and the network device b.

After receiving the route advertisement packet 1, the network device a generates a key and a routing entry based on the routing prefix and the encryption extended information in the route advertisement packet 1. The routing entry generated by the network device a indicates an outbound interface to the network device c and indicates that a packet needs to be encrypted by using the key before the packet to the network device c is forwarded.

Similarly, after receiving the route advertisement packet 1, the network device b generates a key and a routing entry based on the routing prefix and the encryption extended information in the route advertisement packet 1. The routing entry generated by the network device b indicates an outbound interface to the network device c and indicates that a packet needs to be encrypted by using the key before the packet to the network device c is forwarded.

FIG. 12 is a diagram of distributing encryption information between different autonomous systems according to an embodiment of this application. In FIG. 12, data communication is performed between a network device 1 and a network device 2, and a data packet from a network device 3 to a network device 5 needs to be encrypted for transmission.

First, the network device 2 sends a route advertisement packet 2 to the network device 5. The route advertisement packet 2 carries a routing prefix, and the network device 2 is a border device of the routing prefix.

Then, the network device 5 generates, based on the route advertisement packet 2 received from the network device 2, a route advertisement packet 3 carrying encryption extended information, and sends the route advertisement packet 3 to the network device 4. A routing prefix carried in the route advertisement packet 3 is the same as the routing prefix in the route advertisement packet 2. The encryption extended information in the route advertisement packet 3 indicates that a network device that needs to establish an encrypted connection to the network device 5 is the network device 3.

After receiving the route advertisement packet 3 sent by the network device 5, the network device 4 identifies that the route advertisement packet 3 has a transit attribute. Therefore, the network device 4 forwards the route advertisement packet 3 to the network device 3.

After receiving the route advertisement packet 3, the network device 3 generates a key and a routing entry 3 based on the routing prefix and the encryption extended information in the route advertisement packet 3. The routing entry 3 indicates an outbound interface to the network device 2 and indicates that a packet needs to be encrypted by using the key before the packet to the network device 2 is forwarded.

In this way, when the network device 3 receives, from the network device 1, a data packet to the network device 2, the network device 3 encrypts the data packet based on an indication of the routing entry 3, and then sends an encrypted data packet to the network device 4. After receiving the encrypted data packet from the network device 4, the network device 5 decrypts the encrypted data packet, and sends the decrypted data packet to the network device 2.

The following describes a process of distributing encryption information in detail from the perspective of a network device (referred to as a transmitter side device for short) that advertises a route advertisement packet carrying encryption extended information, and a network device (referred to as a receiver side device for short) that receives the route advertisement packet carrying the encryption extended information. The transmitter side device is, for example, the second network device in the foregoing embodiments, and the receiver side device is, for example, the first network device in the foregoing embodiments.

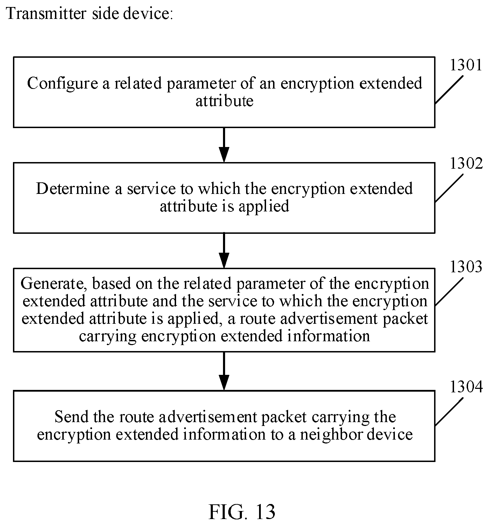

FIG. 13 is a schematic flowchart in which a transmitter side device advertises a route advertisement packet carrying encryption extended information according to an embodiment of this application. As shown in FIG. 13, a procedure in which the transmitter side device advertises the route advertisement packet carrying the encryption extended information includes the following steps 1301 to 1304.

Step 1301: The transmitter side device configures a related parameter of an encryption extended attribute.

In this embodiment, a manner in which the transmitter side device configures the related parameter of the encryption extended attribute is that, for example, a controller delivers the related parameter of the encryption extended attribute to the transmitter side device, or management personnel manually configures the related parameter of the encryption extended attribute on the transmitter side device.

The related parameter of the encryption extended attribute includes but is not limited to the following parameters: an IP address of the transmitter side device, a router identifier of the transmitter side device, a QKD key identifier for quantum encryption, a count used to identify key update, a key exchange algorithm group identifier, exchange data of a key exchange algorithm, a security protocol type, a packet encapsulation mode, a verification algorithm, an encryption algorithm, and information about a network device that needs to establish an encrypted connection to the transmitter side device.

Step 1302: The transmitter side device determines a service to which the encryption extended attribute is applied.

For example, the transmitter side device determines, based on a preconfigured address family, VPN instance, or routing policy, the service to which the encryption extended attribute is applied, that is, determines which network prefixes on the transmitter side device are related to the encryption extended attribute.

Step 1303: The transmitter side device generates, based on the related parameter of the encryption extended attribute and the service to which the encryption extended attribute is applied, a route advertisement packet carrying encryption extended information.

After determining the service to which the encryption extended attribute is applied, the transmitter side device can generate the encryption extended information based on the related parameter of the encryption extended attribute. In addition, the route advertisement packet carries a routing prefix and the encryption extended information of the routing prefix. The routing prefix is related to the service to which the encryption extended attribute is applied.

Step 1304: The transmitter side device sends the route advertisement packet carrying the encryption extended information to a neighbor device.

Optionally, before the transmitter side device sends the route advertisement packet of the encryption extended information to the neighbor device, identity authentication on both the transmitter side device and another network device that the route advertisement packet can reach in the data communication network has passed, to ensure that encryption and decryption parties establish a relationship under legal identities, and prevent malicious spoofers from establishing a relationship to obtain sensitive data information.

For example, an authentication relationship is established between the transmitter side device and another network device by using a transport layer security (Transport Layer Security, TLS) identity authentication mechanism. Alternatively, an authentication relationship is established between the transmitter side device and another network device by using a preset identity key. Specifically, the transmitter side device indicates, by using a bit flag in the route advertisement packet, whether the encryption extended information in the route advertisement packet is encrypted and integrity protected. In addition, the transmitter side device encrypts the encryption extended information in the route advertisement packet by using the preset identity key, performs integrity calculation on content obtained by encrypting the encryption extended information by using the preset identity key, and fills the route advertisement packet with a calculation result. In this way, after receiving the route advertisement packet, the receiver side device performs integrity verification on corresponding content in the route advertisement packet by using the preset identity key, and parses the content in the route advertisement packet by using the preset identity key after the verification succeeds, to obtain the encryption extended information.

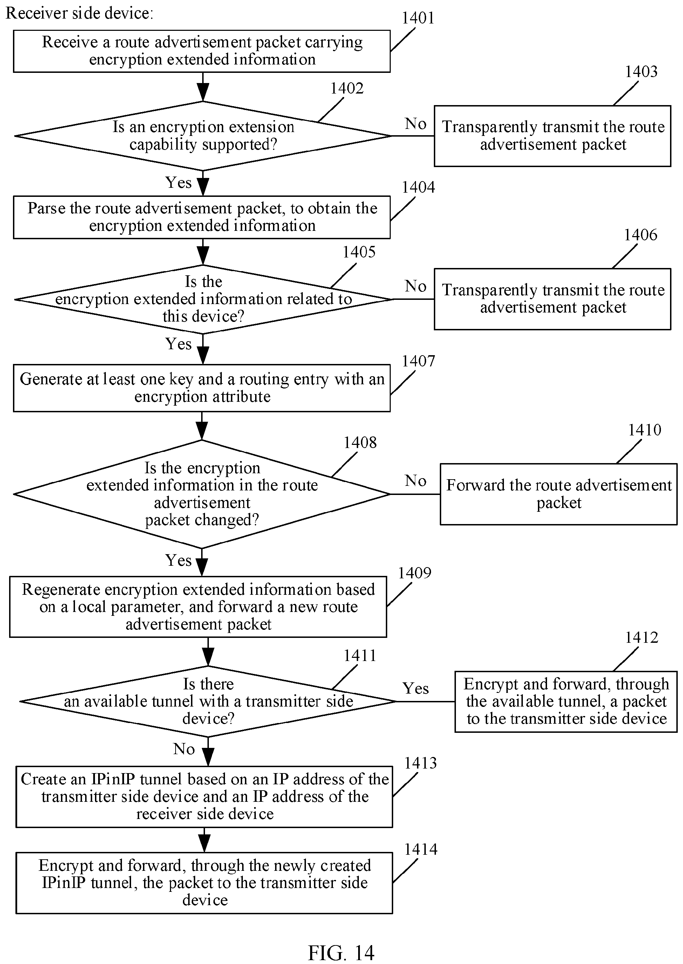

FIG. 14 is a schematic flowchart in which a receiver side device receives and processes a route advertisement packet carrying encryption extended information according to an embodiment of this application. As shown in FIG. 14, a procedure in which the receiver side device receives and processes the route advertisement packet carrying the encryption extended information includes the following steps 1401 to 1414. In FIG. 14, the receiver side device is the first network device in the foregoing embodiments.

Step 1401: Receive a route advertisement packet carrying encryption extended information.

The receiver side device may receive the route advertisement packet carrying the encryption extended information from a neighbor device or directly from the transmitter side device.

Step 1402: Determine whether this device supports an encryption extension capability.

Step 1403: If this device does not support the encryption extension capability, transparently transmit the route advertisement packet.

If the receiver side device does not support the encryption extension capability, the receiver side device transparently transmits the route advertisement packet without processing the route advertisement packet Alternatively, the receiver side device generates a corresponding routing entry based on only a routing prefix in the route advertisement packet, and the routing entry generated by the receiver side device does not have an encryption attribute.

Step 1404: If this device supports the encryption extension capability, parse the route advertisement packet, to obtain the encryption extended information.

Step 1405: Determine whether the encryption extended information is related to this device.

The receiver side device may determine, based on information about an encryption network topology indicated in the encryption extended information, whether the encryption extended information is related to this device.

Step 1406: If the encryption extended information is not related to the device, transparently transmit the route advertisement packet.

Step 1407: If the encryption extended information is related to this device, generate at least one key and a routing entry with an encryption attribute.

Step 1408: Determine whether the encryption extended information in the route advertisement packet needs to be changed.

If the receiver side device needs to additionally establish an encrypted connection to another network device, the receiver side device needs to change the encryption extended information in the route advertisement packet. If the receiver side device does not need to additionally establish the encrypted connection to the another network device, the receiver side device does not need to change the encryption extended information in the route advertisement packet.

Step 1409: If the encryption extended information in the route advertisement packet needs to be changed, regenerate encryption extended information based on a local parameter, and forward a new route advertisement packet.

The new route advertisement packet carries the regenerated encryption extended information.

Step 1410: If the encryption extended information in the route advertisement packet does not need to be changed, forward the route advertisement packet.

When the encryption extended information in the route advertisement packet does not need to be changed, the receiver side device forwards the received route advertisement packet to the neighbor device without changing the encryption extended information in the route advertisement packet.

Step 1411: Determine whether there is an available tunnel with a transmitter side device.

Step 1412: If there is the available tunnel with the transmitter side device, encrypt and forward, through the available tunnel, a packet to the transmitter side device.

Step 1413: If there is no available tunnel with the transmitter side device, create an IPinIP tunnel based on an IP address of the transmitter side device and an IP address of the receiver side device.

Step 1414: Encrypt and forward, through the newly created IPinIP tunnel, the packet to the transmitter side device.

In addition, after the receiver side device receives the route advertisement packet sent by the transmitter side device, the receiver side device further generates a security parameter index based on the encryption extended information in the route advertisement packet and a local parameter, to identify an encrypted connection between the receiver side device and the transmitter side device.

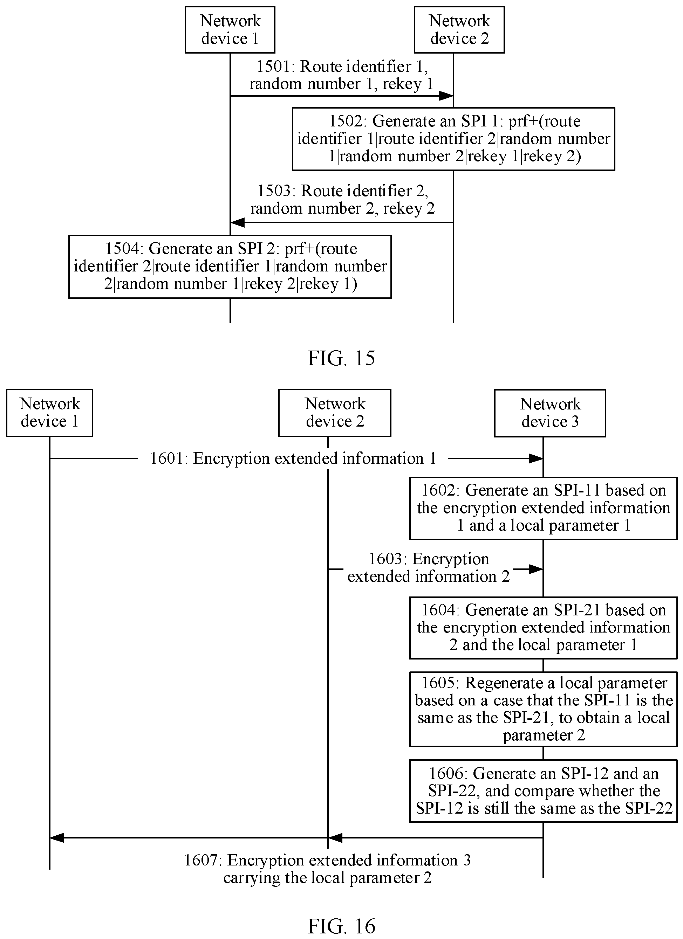

FIG. 15 is a schematic flowchart of generating a security parameter index between network devices according to an embodiment of this application. As shown in FIG. 15, a procedure of generating the security parameter index between the network devices includes the following steps 1501 to 1504.

Step 1501: A network device 1 sends a router identifier 1, a random number 1, and a rekey 1 to a network device 2.

The router identifier 1, the random number 1, and the rekey 1 are carried in encryption extended information. The network device 1 sends the router identifier 1, the random number 1, and the rekey 1 by sending a route advertisement packet including the encryption extended information to the network device 2. The router identifier 1 is a router identifier of the network device 1, and both the random number 1 and the rekey 1 are generated by the network device 1.

Step 1502: The network device 2 generates an SPI 1.

The network device 2 generates the SPI 1 by using a pseudorandom function prf+(). The SPI 1 is prf+(router identifier 1|router identifier 2|random number 1|random number 2|rekey 1|rekey 2). The router identifier 2 is an identifier of the network device 2, and both the random number 2 and the rekey 2 are generated by the network device 1.

The SPI 1 identifies an encrypted connection from the network device 1 to the network device 2. The network device 2 may further generate an SPI 3 identifying an encrypted connection from the network device 2 to the network device 1. A parameter used to generate the SPI 3 is the same as a parameter used to generate the SPI 1. The SPI 3 is prf+(router identifier 2|router identifier 1|random number 2|random number 1|rekey 2|rekey 1).

Step 1503: The network device 2 sends a router identifier 2, a random number 2, and a rekey 2 to the network device 1.

Similarly, the network device 2 sends the router identifier 2, the random number 2, and the rekey 2 by sending a route advertisement packet including encryption extended information to the network device 1.

Step 1504: The network device 1 generates an SPI 2.

The network device 2 generates the SPI 2 by using a pseudorandom function prf+(). The SPI 2 is prf+(router identifier 2|router identifier 1|random number 2|random number 1|rekey 2|rekey 1).

In this embodiment, the SPI is generated based on a unique router identifier between two encryption parties, so that uniqueness of the SPI can be effectively ensured.

FIG. 16 is a schematic flowchart of performing renegotiation when a conflict occurs between SPIs according to an embodiment of this application. As shown in FIG. 16, when a conflict occurs between SPIs generated by network devices, the network devices perform the following negotiation procedure.

Step 1601: A network device 1 sends encryption extended information 1 to a network device 3.

The encryption extended information 1 is carried in a route advertisement packet sent by the network device 1 to the network device 3.

Step 1602: The network device 3 generates an SPI-11 based on the encryption extended information 1 and a local parameter 1.

For a specific manner in which the network device 3 generates the SPI-11 based on the encryption extended information 1 and the local parameter 1, refer to step 1502 in the embodiment corresponding to FIG. 15. Details are not described herein again.

Step 1603: A network device 2 sends encryption extended information 2 to the network device 3.

The encryption extended information 2 is carried in a route advertisement packet sent by the network device 2 to the network device 3.

Step 1604: The network device 3 generates an SPI-21 based on the encryption extended information 2 and the local parameter 1.

Step 1605: The network device 3 updates the local parameter based on a case that the SPI-11 is the same as the SPI-21, to obtain a local parameter 2.

After the network device 3 generates a new SPI each time, the network device 3 compares whether the new SPI is the same as the generated SPI. If the SPI-11 is the same as the SPI-21, the network device 3 updates the local parameter, to obtain the local parameter 2.

Step 1606: The network device 3 generates an SPI-12 based on the encryption extended information 1 and the local parameter 2, generates an SPI-22 based on the encryption extended information 2 and the local parameter 2, and compares whether the SPI-12 is still the same as the SPI-22.

After the network device 3 updates the local parameter, the network device 3 recalculates, based on the local parameter 2 obtained through update, the SPIs on which the conflict occurs, and compares whether a conflict still occurs on the SPIs after the local parameter is updated.

Step 1607: When the SPI-12 is different from the SPI-22, the network device 3 sends encryption extended information 3 to the network device 1 and the network device 2, where the encryption extended information 3 carries the local parameter 2.

In addition, if the SPI-12 is still the same as the SPI-22, the network device 3 continues to update the local parameter until no conflict occurs on SPIs.

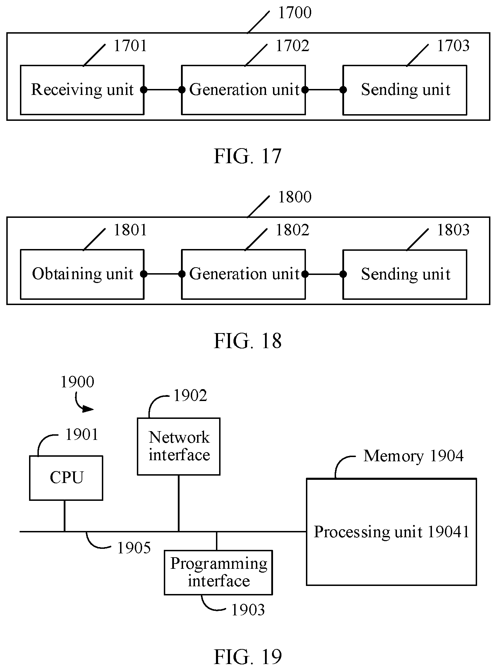

To implement the foregoing embodiments, this application further provides a network device. FIG. 17 is a diagram of a structure of a network device 1700 according to an embodiment of this application. The network device 1700 shown in FIG. 17 is, for example, the first network device in the embodiments corresponding to FIG. 3 and FIG. 10, or the receiver side device in the embodiment corresponding to FIG. 14.

As shown in FIG. 17, the network device 1700 includes: a receiving unit 1701, configured to receive a first route advertisement packet, where the first route advertisement packet includes a routing prefix and first encryption extended information related to the routing prefix, and the first encryption extended information includes a first parameter for key generation; and a generation unit 1702, configured to generate at least one key based on the first encryption extended information, where the at least one key is used to encrypt a data packet from the network device to a network indicated by the routing prefix and/or decrypt a data packet from the network indicated by the routing prefix to the network device, where the generation unit 1702 is further configured to generate a routing entry based on the first route advertisement packet, where the routing entry includes the routing prefix, and the routing entry indicates an outbound interface on the network device to the network indicated by the routing prefix and indicates to encrypt, before a data packet whose destination address belongs to the network indicated by the routing prefix is forwarded, the data packet by using the at least one key.

Optionally, the first encryption extended information is carried in a first TLV field in the first route advertisement packet, and the first TLV field includes the first parameter for key generation.

Optionally, the first encryption extended information further includes information indicating a first encryption network topology, and the information about the first encryption network topology indicates a plurality of network devices forming the first encryption network topology and indicates that the plurality of network devices are allowed to establish an encrypted connection.

Optionally, the first encryption extended information is further carried in a second TLV field in the first route advertisement packet, and the second TLV field indicates the information about the first encryption network topology.

Optionally, the first route advertisement packet is a BGP message or an IGP message.

Optionally, the first route advertisement packet is a BGP update message. The first TLV field and the second TLV field are carried in an extended path attribute field in the BGP update message.

Optionally, the first route advertisement packet is an open shortest path first OSPF message. The first TLV field and the second TLV field are carried in a link state advertisement sub-TLV field in the OSPF message.

Optionally, the generation unit 1702 is further configured to: when obtaining a target packet, if a destination address of the target packet matches the routing prefix in the routing entry, encrypt the target packet by using the at least one key based on an indication of the routing entry.

Optionally, the network device further includes a sending unit 1703.

If there is a created tunnel between the network device and a second network device, the sending unit 1703 is configured to send an encrypted target packet through the created tunnel. The second network device is a border device in the network indicated by the routing prefix.

If there is no created tunnel between the network device and the second network device, the generation unit 1702 is configured to newly create a tunnel with the second network device, and the sending unit 1703 is configured to send an encrypted target packet through the newly created tunnel.

Optionally, the first encryption extended information further includes an IP address of the second network device. The generation unit 1702 is configured to create an IPinIP tunnel with the second network device based on the IP address of the second network device and an IP address of a first network device.

Optionally, the first TLV field includes an identifier of one or more network devices, the one or more network devices are devices that need to establish an encrypted connection to the second network device in an encryption network topology, and the second network device is the border device in the network indicated by the routing prefix.

Optionally, the second TLV field indicates the first encryption network topology to which one or more network devices belong and an identifier of the one or more network devices in the first encryption network topology, the one or more network devices are devices that need to establish an encrypted connection to the second network device in the first encryption network topology, and the second network device is the border device in the network indicated by the routing prefix.

Optionally, the second TLV field includes a plurality of bits, one of the plurality of bits indicates at least one network device in the first encryption network topology, and the one or more network devices correspond to one or more bits with preset set states in the plurality of bits.

Optionally, the first TLV field includes a router identifier of the second network device, and the second network device is the border device in the network indicated by the routing prefix. The generation unit 1702 is further configured to generate at least one key based on the router identifier of the second network device and a router identifier of the first network device. Both the router identifier of the second network device and the router identifier of the first network device are unique identifiers.

Optionally, the generation unit 1702 is further configured to: generate a first security parameter index based on the first TLV field and a local parameter, where the first security parameter index indicates an encrypted connection between the network device and the second network device, the local parameter includes a random number and/or an identifier of the first network device, and the second network device is the border device in the network indicated by the routing prefix; and if the first security parameter index is the same as another security parameter index that has been generated in the network device, update the local parameter and generate a second security parameter index based on the first TLV field and an updated local parameter. The sending unit 1703 is further configured to send the updated local parameter to the second network device.

Optionally, the first TLV field further includes a quantum key parameter.

Optionally, the generation unit 1702 is further configured to generate second encryption extended information, where the second encryption extended information includes a second parameter for key generation and information about a second encryption network topology, and the information about the second encryption network topology indicates a plurality of network devices forming the second encryption network topology and indicates that the plurality of network devices in the second encryption network topology are allowed to establish an encrypted connection; and replace, for the first network device, the first encryption extended information in the first route advertisement packet with the second encryption extended information, to obtain a second route advertisement packet. The sending unit 1703 is further configured to send, for the first network device, the second route advertisement packet to a neighbor device.

FIG. 18 is a diagram of a structure of a network device 1800 according to an embodiment of this application. The network device 1800 shown in FIG. 18 is, for example, the second network device in the embodiments corresponding to FIG. 3 and FIG. 10, or the transmitter side device in the embodiment corresponding to FIG. 13.

As shown in FIG. 18, the network device 1800 includes: an obtaining unit 1801, configured to obtain encryption information related to a service, where the encryption information indicates an object to which service encryption is applied; a generation unit 1802, configured to generate a route advertisement packet based on the encryption information, where the route advertisement packet includes a routing prefix and encryption extended information related to the routing prefix, and the encryption extended information includes a parameter for key generation; and a sending unit 1803, configured to send the route advertisement packet to a neighbor device.

Optionally, the object to which the service encryption is applied includes an address family or a VPN instance for which an encrypted connection needs to be established. The generation unit 1802 is further configured to generate the route advertisement packet based on a case that the routing prefix belongs to a network prefix in the address family or the VPN instance. The network device is a border device in a network indicated by the routing prefix.

Optionally, the object to which the service encryption is applied includes a routing policy, and the routing policy indicates a network device for which an encrypted connection needs to be established. The generation unit 1802 is further configured to generate the route advertisement packet based on a case that the network device belongs to the network device indicated in the routing policy.

FIG. 19 is a diagram of a structure of a network device 1900 according to an embodiment of this application. The network device 1900 shown in FIG. 19 may be configured to perform steps performed by any device of the first network device, the second network device, the transmitter side device, or the receiver side device in the foregoing embodiments. Although the network device 1900 shown in FIG. 19 shows some specific features, a person skilled in the art is aware from embodiments of this application that, for brevity, FIG. 19 does not show various other features, to avoid confusing more related aspects of the implementations disclosed in embodiments of this application. For this purpose, as an example, in some implementations, the network device 1900 includes one or more processors (for example, CPUs) 1901, a network interface 1902, a programming interface 1903, a memory 1904, and one or more communication buses 1905 that are configured to interconnect various components. In some other implementations, some functional components or units may be omitted or added to the network device 1900 based on the foregoing examples.

In some implementations, the network interface 1902 is configured to connect to one or more other network devices/servers in a network system. In some implementations, the communication bus 1905 includes a circuit that interconnects and controls communication between system components. The memory 1904 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 1904 may include a volatile memory. The volatile memory may be a random access memory (random access memory, RAM), used as an external cache.

In some implementations, a non-transitory computer-readable storage medium of the memory 1904 stores the following programs, modules, and data structures, or a subset thereof, for example, includes an obtaining unit (not shown in the figure), a sending unit (not shown in the figure), and a processing unit 19041.

In a possible embodiment, the network device 1900 may have any function of the network device in the method embodiment corresponding to FIG. 3.

It should be understood that the network device 1900 corresponds to the first network device in the method embodiment. The modules and the foregoing other operations and/or functions in the network device 1900 are separately configured to implement various steps and methods implemented by the first network device in the method embodiment. For specific details, refer to the method embodiment corresponding to FIG. 3. For brevity, details are not described herein again.

It should be understood that, in this application, the network interface 1902 on the network device 1900 may complete data receiving and sending operations, or the processor may invoke program code in the memory, and implement a function of a transceiver unit in cooperation with the network interface 1902 when needed.

In various implementations, the network device 1900 is configured to perform the method for distributing encryption information provided in embodiments of this application, for example, perform the method for distributing encryption information corresponding to the embodiment shown in FIG. 3.

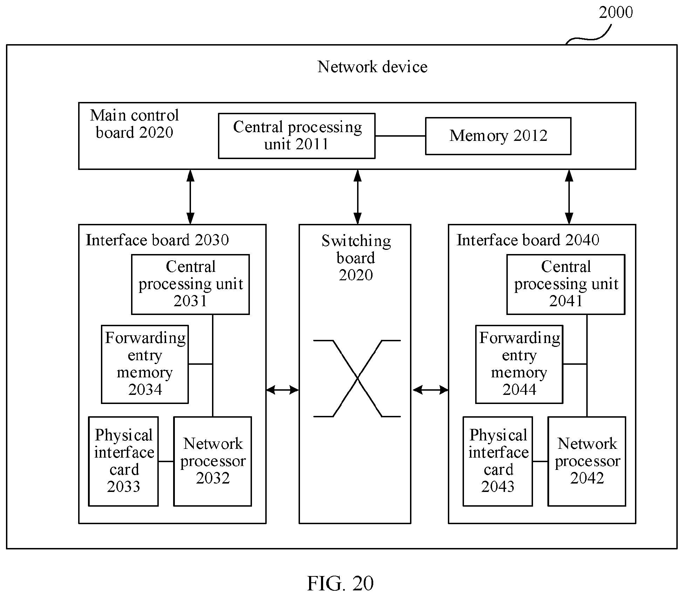

A specific structure of the network device described in FIG. 19 in this application may be shown in FIG. 20.

FIG. 20 is a diagram of a structure of a network device 2000 according to an embodiment of this application. The network device 2000 shown in FIG. 20 may be configured to perform steps performed by any device of the first network device, the second network device, the transmitter side device, or the receiver side device in the foregoing embodiments. The network device 2000 includes a main control board 2020 and an interface board 2030.

The main control board 2020 is also referred to as a main processing unit (main processing unit, MPU) or a route processor (route processor). The main control board 2020 is configured to control and manage components in the network device 2000, including route calculation, device management, device maintenance, and protocol processing functions. The main control board 2020 includes a central processing unit 2011 and a memory 2012.

The interface board 2030 is also referred to as a line processing unit (line processing unit, LPU), a line card (line card), or a service board. The interface board 2030 is configured to provide various service interfaces and implement data packet forwarding. Service interfaces include but are not limited to Ethernet interfaces and POS (Packet over SONET/SDH) interfaces. The interface board 2030 includes a central processing unit 2031, a network processor 2032, a physical interface card (physical interface card, PIC) 2033, and a forwarding entry memory 2034.

The central processing unit 2031 on the interface board 2030 is configured to control and manage the interface board 2030, and communicate with the central processing unit 2011 on the main control board 2020.

The network processor 2032 is configured to implement packet forwarding processing. A form of the network processor 2032 may be a forwarding chip.

The physical interface card 2033 is configured to implement a physical layer interconnection function. Original traffic enters the interface board 2030, and a processed packet is sent out from the physical interface card 2033. The physical interface card 2033 includes at least one physical interface. The physical interface is also referred to as a physical port, and the physical interface may be a flexible Ethernet (Flexible Ethernet, FlexE) physical interface. In some embodiments, the central processing unit 2031 on the interface board 2030 may alternatively perform a function of the network processor 2032, for example, implement software forwarding based on a general-purpose CPU. In this way, the interface board 2030 does not need the network processor 2032.

Optionally, the network device 2000 includes a plurality of interface boards. For example, the network device 2000 further includes an interface board 2040. The interface board 2040 includes a central processing unit 2041, a network processor 2042, a physical interface card 2043, and a forwarding entry memory 2044.

Optionally, the network device 2000 further includes a switching board 2020. The switching board 2020 may also be referred to as a switch fabric unit (switch fabric unit, SFU). When the network device has a plurality of interface boards 2030, the switching board 2020 is configured to complete data exchange between the interface boards. For example, the interface board 2030 and the interface board 2040 may communicate with each other through the switching board 2020.

The main control board 2020 is coupled to the interface board. For example, the main control board 2020, the interface board 2030 and the interface board 2040, and the switching board 2020 are connected via a system bus and/or a system backplane to implement interworking. In a possible implementation, an inter-process communication (inter-process communication, IPC) protocol channel is established between the main control board 2020 and the interface board 2030, and the main control board 2020 and the interface board 2030 communicate with each other through the IPC channel.

Logically, the network device 2000 includes a control plane and a forwarding plane. The control plane includes the main control board 2020 and the central processing unit 2031. The forwarding plane includes components used for forwarding, for example, the forwarding entry memory 2034, the physical interface card 2033, and the network processor 2032. The control plane performs functions such as advertising a route, generating a forwarding table, processing signaling and a protocol packet, and configuring and maintaining a status of a device. The control plane delivers the generated forwarding table to the forwarding plane. On the forwarding plane, the network processor 2032 looks up and forwards a packet received by the physical interface card 2033 based on the forwarding table delivered by the control plane. The forwarding table delivered by the control plane may be stored in the forwarding entry memory 2034. In some embodiments, the control plane and the forwarding plane may be completely separated, and are not on a same device.

It should be understood that, in this embodiment of this application, an operation on the interface board 2040 is consistent with an operation on the interface board 2030. For brevity, details are not described again. It should be understood that the network device 2000 in this embodiment may correspond to the first network device in the foregoing method embodiments. The main control board 2020, the interface board 2030, and/or the interface board 2040 in the network device 2000 may implement functions and/or various steps implemented by the first network device in the foregoing method embodiments. For brevity, details are not described herein again.

It should be noted that there may be one or more main control boards including an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards by using the switching board, to provide a large-capacity data exchange and processing capability. Optionally, the form of the network device may also be that there is only one card. In other words, there is no switching board, and functions of the interface board and the main control board are integrated on the one card. In this case, a central processing unit on the interface board and a central processing unit on the main control board may be combined into one central processing unit on the one card, to perform a function of the two superimposed. Which architecture is specifically used depends on a specific networking deployment scenario, and is not uniquely limited herein.

It should be understood that the network devices in the foregoing product forms separately have any function of the first network device and the second network device in the foregoing method embodiments, and details are not described herein.

Further, an embodiment of this application further provides a computer program product. When the computer program product is run on a network device, the network device is enabled to perform the method performed by any network device in the method embodiment corresponding to FIG. 3.

An embodiment of this application further provides a chip system, including a processor and an interface circuit. The interface circuit is configured to receive instructions and transmit the instructions to the processor. The processor is configured to implement the method in any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented through software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory memory, for example, a read-only memory ROM. The memory and the processor may be integrated into a same chip, or may be separately disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information.

In several embodiments provided in this application, it should be understood that the disclosed system, apparatus, and method may be implemented in other manners. For example, the above described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

## Claims

1. A method for distributing encryption information, comprising:
receiving, by a first network device, a first route advertisement packet, wherein the first route advertisement packet comprises a routing prefix and first encryption extended information related to the routing prefix, and the first encryption extended information comprises a first parameter for key generation;
generating, by the first network device, at least one key based on the first encryption extended information, wherein the at least one key is used to encrypt a data packet from the first network device to a network indicated by the routing prefix and/or decrypt a data packet from the network indicated by the routing prefix to the first network device; and
generating, by the first network device, a routing entry based on the first route advertisement packet, wherein the routing entry comprises the routing prefix, and the routing entry indicates an outbound interface on the first network device to the network indicated by the routing prefix and indicates to encrypt, before a data packet whose destination address belongs to the network indicated by the routing prefix is forwarded, the data packet by using the at least one key.

2. The method according to claim 1, wherein the first encryption extended information is carried in a first type length value, TLV, field in the first route advertisement packet, and the first TLV field comprises the first parameter for key generation.

3. The method according to claim 2, wherein the first encryption extended information further comprises information indicating a first encryption network topology, and the information about the first encryption network topology indicates a plurality of network devices forming the first encryption network topology and indicates that the plurality of network devices are allowed to establish an encrypted connection.

4. The method according to claim 3, wherein the first encryption extended information is further carried in a second TLV field in the first route advertisement packet, and the second TLV field indicates the information about the first encryption network topology.

5. The method according to claim 4, wherein the first route advertisement packet is a border gateway protocol, BGP, message or an interior gateway protocol, IGP, message.

6. The method according to claim 5, wherein the first route advertisement packet is a BGP update message; and
the first TLV field and the second TLV field are carried in an extended path attribute field in the BGP update message.

7. The method according to claim 5, wherein the first route advertisement packet is an open shortest path first, OSPF, message; and
the first TLV field and the second TLV field are carried in a link state advertisement sub-TLV field in the OSPF message.

8. The method according to any one of claims 1 to 7, wherein the method further comprises:
when the first network device obtains a target packet, if a destination address of the target packet matches the routing prefix in the routing entry, encrypting, by the first network device, the target packet by using the at least one key based on an indication of the routing entry.

9. The method according to any one of claims 3 to 8, wherein the first TLV field comprises an identifier of one or more network devices, the one or more network devices are devices that need to establish an encrypted connection to the second network device in the first encryption network topology, and the second network device is the border device in the network indicated by the routing prefix.

10. The method according to any one of claims 4 to 8, wherein the second TLV field indicates the first encryption network topology to which one or more network devices belong and an identifier of the one or more network devices in the first encryption network topology, the one or more network devices are devices that need to establish an encrypted connection to the second network device in the first encryption network topology, and the second network device is the border device in the network indicated by the routing prefix.

11. A method for distributing encryption information, comprising:
obtaining, by a second network device, encryption information related to a service, wherein the encryption information indicates an object to which service encryption is applied; and generating, by the second network device, a route advertisement packet based on the encryption information, wherein the route advertisement packet comprises a routing prefix and encryption extended information related to the routing prefix, and the encryption extended information comprises a parameter for key generation; and
sending, by the second network device, the route advertisement packet to a neighbor device.

12. The method according to claim 11, wherein the object to which the service encryption is applied comprises an address family or a virtual private network, VPN, instance for which an encrypted connection needs to be established; and
the generating, by the second network device, a route advertisement packet based on the encryption information comprises:
generating, by the second network device, the route advertisement packet based on a case that the routing prefix belongs to a network prefix in the address family or the VPN instance, wherein the second network device is a border device in a network indicated by the routing prefix.

13. The method according to claim 11, wherein the object to which the service encryption is applied comprises a routing policy, and the routing policy indicates a network device for which an encrypted connection needs to be established; and
the generating, by the second network device, a route advertisement packet based on the encryption information comprises:
generating, by the second network device, the route advertisement packet based on a case that the second network device belongs to the network device indicated in the routing policy.

14. A network device, wherein the network device is configured and intended to perform any one of the methods according to claims 1-10.

15. A network device, wherein the network device is configured and intended to perform any one of the methods according to claims 11-13.

## Patentansprüche

1. Verfahren zum Verteilen von Verschlüsselungsinformationen, umfassend:
Empfangen eines ersten Route Advertisement-Pakets durch eine erste Netzwerkvorrichtung, wobei das erste Route Advertisement-Paket ein Routing-Präfix und erste erweiterte Verschlüsselungsinformationen in Bezug auf das Routing-Präfix umfasst und die ersten erweiterten Verschlüsselungsinformationen einen ersten Parameter zur Schlüsselgenerierung umfassen;
Generieren mindestens eines Schlüssels durch die erste Netzwerkvorrichtung basierend auf den ersten erweiterten Verschlüsselungsinformationen, wobei der mindestens eine Schlüssel verwendet wird, um ein Datenpaket von der ersten Netzwerkvorrichtung an ein durch das Routing-Präfix angegebenes Netzwerk zu verschlüsseln und/oder ein Datenpaket vom durch das Routing-Präfix angegebenen Netzwerk an die erste Netzwerkvorrichtung zu entschlüsseln; und
Erzeugen eines Routing-Eintrags durch die erste Netzwerkvorrichtung basierend auf dem ersten Route Advertisement-Paket, wobei der Routing-Eintrag das Routing-Präfix umfasst und der Routing-Eintrag eine ausgehende Schnittstelle auf der ersten Netzwerkvorrichtung zu dem durch das Routing-Präfix angegebenen Netzwerk angibt und angibt, dass das Datenpaket unter Verwendung des mindestens einen Schlüssels verschlüsselt werden soll, bevor es weitergeleitet wird, dessen Zieladresse zu dem durch das Routing-Präfix angegebenen Netzwerk gehört.

2. Verfahren nach Anspruch 1, wobei die ersten erweiterten Verschlüsselungsinformationen in einem ersten Type-Length-Value-Feld (TLV) im ersten Route Advertisement-Paket übertragen werden und das erste TLV-Feld den ersten Parameter zur Schlüsselgenerierung umfasst.

3. Verfahren nach Anspruch 2, wobei die ersten erweiterten Verschlüsselungsinformationen ferner Informationen umfassen, die eine erste Verschlüsselungsnetzwerktopologie angeben, und die Informationen über die erste Verschlüsselungsnetzwerktopologie eine Vielzahl von Netzwerkvorrichtungen angeben, die die erste Verschlüsselungsnetzwerktopologie bilden, und angeben, dass die Vielzahl von Netzwerkvorrichtungen eine verschlüsselte Verbindung herstellen darf.

4. Verfahren nach Anspruch 3, wobei die ersten erweiterten Verschlüsselungsinformationen außerdem in einem zweiten TLV-Feld im ersten Route Advertisement-Paket übertragen werden und das zweite TLV-Feld die Informationen über die erste Verschlüsselungsnetzwerktopologie angibt.

5. Verfahren nach Anspruch 4, wobei das erste Route Advertisement-Paket ein Border-Gateway-Protokollnachricht (BGP) oder eine Interior-Gateway-Protokollnachricht (IGP) ist.

6. Verfahren nach Anspruch 5, wobei das erste Route Advertisement-Paket eine BGP-Update-Nachricht ist; und
das erste TLV-Feld und das zweite TLV-Feld in einem erweiterten Pfadattributfeld in der BGP-Update-Nachricht übertragen werden.

7. Verfahren nach Anspruch 5, wobei das erste Route Advertisement-Paket eine Open Shortest Path First-Nachricht (OSPF) ist; und
Das erste TLV-Feld und das zweite TLV-Feld werden in einem Link-State-Advertisement-Sub-TLV-Feld in der OSPF-Nachricht übertragen.

8. Verfahren nach einem der Ansprüche 1 bis 7, wobei das Verfahren ferner Folgendes umfasst:
wenn die erste Netzwerkvorrichtung ein Zielpaket erhält und eine Zieladresse des Zielpakets mit dem Routing-Präfix im Routing-Eintrag übereinstimmt, Verschlüsseln des Zielpakets durch die erste Netzwerkvorrichtung unter Verwendung des mindestens einen Schlüssels basierend auf einer Angabe des Routing-Eintrags.

9. Verfahren nach einem der Ansprüche 3 bis 8, wobei das erste TLV-Feld eine Kennung einer oder mehrerer Netzwerkvorrichtungen umfasst, die eine oder die mehreren Netzwerkvorrichtungen Vorrichtungen sind, die eine verschlüsselte Verbindung zur zweiten Netzwerkvorrichtung in der ersten verschlüsselten Netzwerktopologie herstellen müssen, und die zweite Netzwerkvorrichtung die Border-Vorrichtung im Netzwerk ist, die durch das Routing-Präfix angegeben ist.

10. Verfahren nach einem der Ansprüche 4 bis 8, wobei das zweite TLV-Feld die erste Verschlüsselungsnetzwerktopologie angibt, zu der eine oder mehrere Netzwerkvorrichtungen gehören, sowie eine Kennung des einen oder der mehreren Netzwerkvorrichtungen in der ersten Verschlüsselungsnetzwerktopologie, wobei die eine oder die mehreren Netzwerkvorrichtungen Vorrichtungen sind, die eine verschlüsselte Verbindung zur zweiten Netzwerkvorrichtung in der ersten Verschlüsselungsnetzwerktopologie herstellen müssen, und wobei die zweite Netzwerkvorrichtung die Border-Vorrichtung in dem durch das Routing-Präfix angegebenen Netzwerk ist.

11. Verfahren zum Verteilen von Verschlüsselungsinformationen, umfassend:
Erlangen von Verschlüsselungsinformationen in Bezug auf einen Dienst durch eine zweite Netzwerkvorrichtung, wobei die Verschlüsselungsinformationen ein Objekt angeben, auf das die Dienstverschlüsselung angewendet wird; und Generieren eines Route Advertisement-Pakets durch die zweite Netzwerkvorrichtung basierend auf den Verschlüsselungsinformationen, wobei das Route Advertisement-Paket ein Routing-Präfix und erweiterte Verschlüsselungsinformationen in Bezug auf das Routing-Präfix umfasst und die erweiterten Verschlüsselungsinformationen einen Parameter zur Schlüsselgenerierung umfassen; und
Senden des Route Advertisement-Pakets durch die zweite Netzwerkvorrichtung an eine benachbarte Vorrichtung.

12. Verfahren nach Anspruch 11, wobei das Objekt, auf das die Dienstverschlüsselung angewendet wird, eine Adressfamilie oder eine Instanz eines virtuellen privaten Netzwerks (VPN) umfasst, für das eine verschlüsselte Verbindung hergestellt werden muss; und
das Erzeugen eines Route Advertisement-Pakets durch die zweite Netzwerkvorrichtung auf der Grundlage der Verschlüsselungsinformationen Folgendes umfasst:
Erzeugen des Route Advertisement-Pakets durch die zweite Netzwerkvorrichtung basierend auf dem Fall, dass das Routing-Präfix zu einem Netzwerkpräfix in der Adressfamilie oder der VPN-Instanz gehört, wobei die zweite Netzwerkvorrichtung eine Border-Vorrichtung in einem durch das Routing-Präfix angegebenen Netzwerk ist.

13. Verfahren nach Anspruch 11, wobei das Objekt, auf das die Dienstverschlüsselung angewendet wird, eine Routing-Richtlinie umfasst und die Routing-Richtlinie eine Netzwerkvorrichtung angibt, für die eine verschlüsselte Verbindung hergestellt werden muss; und
das Erzeugen eines Route Advertisement-Pakets durch die zweite Netzwerkvorrichtung auf der Grundlage der Verschlüsselungsinformationen Folgendes umfasst:
Generieren des Route Advertisement-Pakets durch die zweite Netzwerkvorrichtung basierend auf dem Fall, dass die zweite Netzwerkvorrichtung zu der in der Routing-Richtlinie angegebenen Netzwerkvorrichtung gehört.

14. Netzwerkvorrichtung, wobei die Netzwerkvorrichtung dazu konfiguriert und dafür vorgesehen ist, eines der Verfahren nach einem der Ansprüche 1 bis 10 durchzuführen.

15. Netzwerkvorrichtung, wobei die Netzwerkvorrichtung dazu konfiguriert und dafür vorgesehen ist, eines der Verfahren nach einem der Ansprüche 11 bis 13 durchzuführen.

## Revendications

1. Procédé de distribution d'informations de chiffrement, comprenant :
la réception, par un premier dispositif réseau, d'un premier paquet de publicité de routage, dans lequel le premier paquet de publicité de routage comprend un préfixe de routage et des premières informations prolongées de chiffrement relatives au préfixe de routage, et les premières informations prolongées de chiffrement comprennent un premier paramètre pour la génération de clés ;
la génération, par le premier dispositif réseau, d'au moins d'une clé basée sur les premières informations prolongées de chiffrement, dans lequel l'au moins une clé est utilisée pour chiffrer un paquet de données du premier dispositif réseau vers un réseau indiqué par le préfixe de routage et/ou pour déchiffrer un paquet de données du réseau indiqué par le préfixe de routage vers le premier dispositif réseau ; et
la génération, par le premier dispositif réseau, d'une entrée de routage basée sur le premier paquet de publicité de routage, dans lequel l'entrée de routage comprend le préfixe de routage, et l'entrée de routage indique une interface de sortie sur le premier dispositif réseau vers le réseau indiqué par le préfixe de routage et indique de chiffrer, avant qu'un paquet de données dont l'adresse de destination appartient au réseau indiqué par le préfixe de routage ne soit transmis, le paquet de données à l'aide au moins d'une clé.

2. Procédé selon la revendication 1, dans lequel les premières informations prolongées de chiffrement sont transportées dans un premier champ de valeur de longueur de type, TLV, dans le premier paquet de publicité de routage, et le premier champ TLV comprend le premier paramètre de génération de clés.

3. Procédé selon la revendication 2, dans lequel les premières informations prolongées de chiffrement comprennent également des informations indiquant une première topologie de réseau de chiffrement, et les informations concernant la première topologie de réseau de chiffrement indiquent une pluralité de dispositifs réseau formant la première topologie de réseau de chiffrement et indiquent que la pluralité de dispositifs réseau sont autorisés à établir une connexion chiffrée.

4. Procédé selon la revendication 3, dans lequel les premières informations prolongées de chiffrement sont également transportées dans un second champ TLV du premier paquet de publicité de routage, et le second champ TLV indique les informations sur la topologie du premier réseau de chiffrement.

5. Procédé selon la revendication 4, dans lequel le premier paquet de publicité de routage est un message de protocole de passerelle frontière, BGP, ou un message de protocole de passerelle intérieure, IGP.

6. Procédé selon la revendication 5, dans lequel le premier paquet de publicité de routage est un message de mise à jour BGP ; et
le premier champ TLV et le second champ TLV sont transportés dans un champ d'attribut de chemin prolongé dans le message de mise à jour BGP.

7. Procédé selon la revendication 5, dans lequel le premier paquet de publicité de routage est un message de premier itinéraire ouvert le plus court, OSPF ; et
le premier champ TLV et le second champ TLV sont transportés dans un sous-champ TLV de publicité d'état de liaison dans le message OSPF.

8. Procédé selon l'une quelconque des revendications 1 à 7, dans lequel le procédé comprend également :
lorsque le premier dispositif réseau reçoit un paquet cible, si l'adresse de destination du paquet cible correspond au préfixe de routage dans l'entrée de routage, le chiffrement, par le premier dispositif réseau, du paquet cible à l'aide de l'au moins une clé basée sur une indication de l'entrée de routage.

9. Procédé selon l'une quelconque des revendications 3 à 8, dans lequel le premier champ TLV comprend un identifiant d'un ou de plusieurs dispositifs réseau, les un ou plusieurs dispositifs réseau sont des dispositifs qui doivent établir une connexion chiffrée avec le second dispositif réseau dans la première topologie de réseau de chiffrement, et le second dispositif réseau est le dispositif de bordure du réseau indiqué par le préfixe de routage.

10. Procédé selon l'une quelconque des revendications 4 à 8, dans lequel le second champ TLV indique la première topologie de réseau de chiffrement à laquelle appartiennent un ou plusieurs dispositifs réseau et un identifiant des un ou plusieurs dispositifs réseau dans la première topologie de réseau de chiffrement, les un ou plusieurs dispositifs réseau sont des dispositifs qui doivent établir une connexion chiffrée avec le second dispositif réseau dans la première topologie de réseau de chiffrement, et le second dispositif réseau est le dispositif de bordure du réseau indiqué par le préfixe de routage.

11. Procédé de distribution d'informations de chiffrement, comprenant :
l'obtention, par un second dispositif réseau, des informations de chiffrement relatives à un service, dans lequel les informations de chiffrement indiquent un objet auquel le chiffrement de service est appliqué ; et la génération, par le second dispositif réseau, d'un paquet de publicité de routage basé sur les informations de chiffrement, dans lequel le paquet de publicité de routage comprend un préfixe de routage et des informations prolongées de chiffrement relatives au préfixe de routage, et les informations prolongées de chiffrement comprennent un paramètre de génération de clés ; et
l'envoi, par le second dispositif réseau, du paquet de publicité de routage à un dispositif voisin.

12. Procédé selon la revendication 11, dans lequel l'objet auquel le chiffrement de service est appliqué comprend une famille d'adresses ou une instance de réseau privé virtuel (VPN) pour laquelle une connexion chiffrée doit être établie ; et
la génération, par le second dispositif réseau, d'un paquet de publicité de routage basé sur les informations de chiffrement comprend :
la génération, par le second dispositif réseau, du paquet de publicité de routage sur la base du cas où le préfixe de routage appartient à un préfixe réseau dans la famille d'adresses ou
l'instance VPN, dans lequel le second dispositif réseau est un dispositif de bordure dans un réseau indiqué par le préfixe de routage.

13. Procédé selon la revendication 11, dans lequel l'objet auquel le chiffrement de service est appliqué comprend une politique de routage, et la politique de routage indique un dispositif réseau pour lequel une connexion chiffrée doit être établie ; et
la génération, par le second dispositif réseau, d'un paquet de publicité de routage basé sur les informations de chiffrement comprend :
la génération, par le second dispositif réseau, du paquet de publicité de routage sur la base du cas où le second dispositif réseau appartient au dispositif réseau indiqué dans la politique de routage.

14. Dispositif réseau, dans lequel le dispositif réseau est configuré et destiné à réaliser l'un quelconque des procédés selon l'une quelconque des revendications 1 à 10.

15. Dispositif réseau, dans lequel le dispositif réseau est configuré et destiné à réaliser l'un quelconque des procédés selon l'une quelconque des revendications 11 à 13.
